Europäisches Patentamt

European Patent Office

Office européen des brevets

(19)

(11) EP 1 201 290 A1

(12) **EUROPEAN PATENT APPLICATION**
published in accordance with Art. 158(3) EPC

(43) Date of publication:
02.05.2002 Bulletin 2002/18

(21) Application number: 00946417.3

(22) Date of filing: 19.07.2000

(51) Int Cl.7: **B01D 53/14**, B01D 53/18,
B01D 53/34, B01D 53/40,
B01D 53/62, C10J 3/00,
C10K 1/08, C10K 1/12

(86) International application number:
PCT/JP00/04857

(87) International publication number:
WO 01/05489 (25.01.2001 Gazette 2001/04)

(84) Designated Contracting States:
**AT BE CH CY DE DK ES FI FR GB GR IE IT LI LU
MC NL PT SE**
Designated Extension States:
**AL LT LV MK RO SI**

(30) Priority: 19.07.1999 JP 20539599
03.12.1999 JP 34527199

(71) Applicant: **EBARA CORPORATION**
Ohta-ku, Tokyo 144-8510 (JP)

(72) Inventors:
• **SU, Qingquan**
Ohta-ku, Tokyo 144-8510 (JP)
• **MIYOSHI, Norihisa**
Ohta-ku, Tokyo 144-8510 (JP)
• **NARUSE, Katsutoshi**
Ohta-ku, Tokyo 144-8510 (JP)
• **OSHITA, Takahiro**
Ohta-ku, Tokyo 144-8510 (JP)
• **KINOSHITA, Kazuo**
Ohta-ku, Tokyo 144-8510 (JP)

(74) Representative: **Wagner, Karl H., Dipl.-Ing.**
Wagner & Geyer,
Patentanwälte,
Gewürzmühlstrasse 5
80538 München (DE)

(54) **APPARATUS AND METHOD FOR CLEANING ACIDIC GAS**

(57) The present invention relates to an acid gas scrubbing apparatus and method in which a gas, to be scrubbed, containing carbon dioxide is brought into contact with a gas scrubbing liquid containing alkaline agent and cooled, and acid gases in the gas are removed. The present invention comprises a gas scrubber (A) for removing acid gases in a gas, to be scrubbed, containing carbon dioxide by bringing the gas to be scrubbed into contact with a gas scrubbing liquid containing alkaline agent, a scrubbing liquid regenerator (B) for regenerating and cooling the gas scrubbing liquid (40) by bringing the gas scrubbing liquid into contact with a regenerating gas (35b) having components different from the gas scrubbing liquid and the gas (30) to be scrubbed, and circulating means provided between the gas scrubber (A) and the scrubbing liquid regenerator (B) for circulating the scrubbing liquid.

FIG. 1

EP 1 201 290 A1

**Description**

**Technical Field**

The present invention relates to an acid gas scrubbing apparatus and method, and more particularly to an acid gas scrubbing apparatus and method in which a gas, to be scrubbed, containing carbon dioxide is brought into contact with a gas scrubbing liquid containing alkaline agent and cooled, and acid gases in the gas are removed.

**Background Art**

In the case where combustible wastes are combusted or gasified, a combustion gas or a produced gas generated by combustion or gasification (hereinafter referred to as "gas to be scrubbed") contains acid gases such as hydrogen chloride, sulfur oxides, nitrogen oxides and hydrogen sulfide. In many cases, the gas to be scrubbed contains a trace amount of these acid gases in the order of ppm. However, even the trace amount of acid gases are toxic to the human body, and such acid gases are corrosive to gas treatment facilities and poisonous to various catalysts, and hence it is necessary to remove such acid gases.

As a means for removing acid gases, a general treatment method is that acid gases are neutralized and absorbed by bringing acid gases into contact with solid or liquid alkaline agent. In a wet-type scrubbing method in which the gas to be scrubbed is brought into contact with alkaline solution, as a pH of alkaline solution is kept higher, the absorption and removal capability of acid gases becomes higher. In many cases, a combustion gas or a produced gas obtained by combustion or gasification of combustible wastes contains carbon dioxide, and the concentration of carbon dioxide is in the range from several percent to ten plus several percent or more and is much higher than the concentration of acid gases of several ppm. Therefore, when acid gases are neutralized by alkaline agent, because carbon dioxide reacts with alkaline agent and consumes alkaline agent, a large amount of alkaline agent is necessary to maintain a pH enough to remove acid gases. Therefore, conventionally, an absorption and removal capability of acid gases must be sacrificed for the economical reason.

In the wet-scrubbing method, since heat exchange between a gas to be scrubbed and a scrubbing liquid is carried out, in the case of scrubbing a high-temperature gas, it is necessary to cool the scrubbing liquid. However, when a high-temperature gas is scrubbed in a wet-type scrubber operated at atmospheric pressure, heat recovered by the scrubbing liquid from the gas to be scrubbed is low-temperature heat having a temperature of $100°C$ or lower, and hence in most cases, such recovered heat is discharged to the atmosphere in a cooling tower or the like, and is not utilized effectively.

In recent years, dioxins generated in incinerators are one of social problems, and it is said that the main cause of generation of dioxins is a resynthesis reaction of dioxins in the temperature range of 250 to $500°C$ in the presence of catalytic incineration ash. Therefore, a system in which gases are rapidly cooled from a temperature equal to or higher than that of dioxins resynthesis to a desired temperature is expected to be widespread in the future, and there is a high possibility that a wet-type scrubbing method is employed as this rapid cooling system. In this case, since a large quantity of low-temperature waste heat is generated, a means for effectively utilizing this low-temperature waste heat has been desired.

On the other hand, for the reason of generation of dioxins or shortage of landfill sites, as a treatment method of combustible wastes, a gasification and melting system in which combustibles are pyrolyzed and gasified, and a produced gas and fly ash are supplied to a high-temperature melting furnace and melted into slag therein is becoming widespread. In such gasification and slagging combustion system, steam or a gas such as carbon dioxide is necessary as a diluent of oxygen for partial combustion.

Particularly, in the case of using a fluidized-bed furnace as a gasification furnace, it is necessary to supply a certain amount of fluidizing gas for the purpose of maintaining fluidization of a fluidized medium. Because such fluidizing gas is also used as an oxidizing agent, in some cases where air is used as a fluidizing gas and combustible wastes having a high calorific value are raw materials, oxygen becomes excessive even in a minimum amount of air supplied for maintaining fluidization of the fluidized medium, and hence a gas serving as a regulator of oxygen concentration in the fluidizing gas is necessary.

Further, an attempt to gasify combustible wastes without complete combustion and utilize a produced gas as a fuel gas is being made at present, and hence there is an increasing demand for steam and carbon dioxide as a supply source for a gasifying agent, i.e. hydrogen atoms and oxygen atoms. Further, in recent years, an attempt to produce hydrogen by further refining the fuel gas obtained by the above process and generate electricity by supplying the produced hydrogen to a fuel cell is being made. In this case, if an amount of carbon dioxide and nitrogen contained in the fuel gas is increased, power consumption required for refining the fuel gas is increased, and hence how to reduce the amount of carbon dioxide and nitrogen contained in the produced gas is becoming an important subject.

Because a large amount of low-temperature waste heat is generated in the wet-type scrubber, if there is a load such as a regional heat supply, then such low-temperature waste heat can be effectively utilized. However, in general, an incineration plant of wastes is located away from residential areas, and there is no effective place for utilizing such waste heat. Thus, in the actual circumstances, such low-temperature waste heat is utilized by constructing a heated pool or a green house deliberately adjacent to the incineration plant.

On the other hand, because a gas treatment requires a highly advanced treatment year by year, consumption of energy is increasing in actuality as in the case where a high-quality steam is used as a diluting gas of oxygen gas as described above.

**Disclosure of Invention**

The present invention has been made in view of the above, and it is therefore an object of the present invention to provide an acid gas scrubbing apparatus and method which can increase energy efficiency and improve an acid gas removal capability in a wet-type scrubber greatly by effectively utilizing low-temperature waste heat of the wet-type scrubber to generate steam and carbon dioxide.

Another object of the present invention is to provide a gasification system of combustibles which combines the above acid gas scrubbing apparatus and a gasification apparatus, an incineration system of combustibles which combines the above acid gas scrubbing apparatus and an incinerator, and a fuel cell power generation system by gasification of combustibles which combines the above gasification system of combustibles and a fuel cell power generation system.

In order to achieve the above object, an acid gas scrubbing apparatus according to the present invention comprises a gas scrubber which brings a gas to be scrubbed into contact with alkaline solution, and a regenerator having a cooling function of alkaline solution and a regeneration function of alkalis.

According to the present invention, in a method for removing acid gases in a gas, to be scrubbed, containing carbon dioxide by bringing the gas to be scrubbed into contact with a gas scrubbing liquid containing alkaline agent, an acid gas scrubbing method is characterized in that: said gas scrubbing liquid is regenerated by bringing said gas scrubbing liquid into contact with a regenerating gas having components different from said gas to be scrubbed, and the regenerated gas scrubbing liquid is used as a scrubbing liquid of said gas, to be scrubbed, containing carbon dioxide.

A gas, to be scrubbed, supplied to a gas scrubber is brought into contact with a scrubbing liquid comprising alkaline solution in a countercurrent flow, and acid gases and carbon dioxide in the gas to be scrubbed are absorbed in the scrubbing liquid. Dust components in the gas to be scrubbed are also entrapped into the scrubbing liquid, and the scrubbed gas becomes a clean gas composed mainly of oxygen, carbon monoxide, hydrogen, and saturated steam which have a small solubility in alkaline solution, and carbon dioxide which has not been dissolved in alkaline solution.

The alkaline scrubbing liquid which has absorbed acid gases and carbon dioxide is sent into a regenerator where the scrubbing liquid is brought into contact with a regenerating gas, such as air, having different components from the gas to be scrubbed to generate steam until a pressure in the regenerator reaches a saturated aqueous vapor pressure at a temperature in the regenerator.

The saturated aqueous vapor pressure is shown in Table 1.

Table 1:

| Operating temperature and saturated aqueous vapor pressure | | | | | | | | |
|---|---|---|---|---|---|---|---|---|
| | unit | | | | | | | |
| temperature | °C | 60 | 80 | 90 | 95 | 150 | 200 | 250 |
| saturated aqueous vapor pressure | bar | 0.20 | 0.47 | 0.70 | 0.85 | 4.80 | 15.50 | 40.00 |

For example, when the regenerator is operated at an atmospheric pressure (about 0.1 PMa (1 bar)) and a temperature of 80°C, a regenerator vent gas discharged from the regenerator accompanies 47% of steam. With vaporization of steam, the scrubbing liquid is deprived of latent heat of vaporization and is cooled. It should be noted that when the regenerating gas accompanies steam whose amount is equal to or greater than the amount corresponding to saturated aqueous vapor pressure in the regenerator, water will not vaporize and the scrubbing liquid will not be cooled in the regenerator.

Further, if a gas containing no carbon dioxide is used as a regenerating gas or an operating pressure of the regenerator is lower than that of the gas scrubber, then carbon dioxide is desorbed and released from alkaline scrubbing liquid in the regenerator due to the difference of partial pressure of carbon dioxide in a gas-phase section of the regenerator. The pH of alkaline scrubbing liquid is increased by releasing of carbon dioxide, and an absorbing capability of acid gases in the alkaline scrubbing liquid is recovered again.

The regenerator vent gas which accompanies steam and desorbed carbon dioxide can be used as a gasifying agent for gasifying the above combustibles and a diluting gas of an oxidizing agent. Further, if air or oxygen is used as a regenerating gas, then the regenerator vent gas can be utilized as a mixed gas of an oxidizing agent and a gasifying agent as it is.

The alkaline scrubbing liquid which has recovered an acid gas absorption function is sent again to the gas scrubber. In the case of using air as a regenerating gas, if water is vaporized from the scrubbing liquid in the regenerator, or a part of the scrubbing liquid is always blown, then it is necessary to replenish a gas scrubbing liquid. This make-up liquid should be a clean liquid which is cleaner than the circulating scrubbing liquid, and hence it is desirable that such make-up liquid is supplied together with make-up alkaline agent to the uppermost section of the gas scrubber, i. e. the most downstream location of stream of the gas to be scrubbed for thereby enhancing the gas scrubbing effect.

With the progress of gas scrubbing, since salts produced by an absorption reaction of acid gases are gradually concentrated in the gas scrubbing liquid, it is necessary to blow the gas scrubbing liquid to prevent salts from being concentrated. Further, also, in the case where the rate of steam accompanied by the gas to be scrubbed is high and the amount of the scrubbing liquid increases, it is necessary to blow the scrubbing liquid. However, if the scrubbing liquid is blown as it is, alkaline agent is also discharged together with the scrubbing liquid, and hence care such as disposal of the scrubbing liquid after concentration should be taken.

In order to enhance the gas scrubbing effect by enhancing a regeneration degree of alkali of the scrubbing liquid as much as possible, it is effective to provide regenerators in a multistage manner such as a series connection. This is because when a chemical reaction is continuously caused, if reaction time is the same, then the rate of reaction in multistage reactors in which reactions are sequentially caused is higher than that in a single perfect-mixing reactor. If the gas to be scrubbed is brought into contact with a scrubbing liquid in a countercurrent flow in a regenerator, the effect in the regenerator comparable to the multistage regenerators can be obtained. However, since mixing of the scrubbing liquid in a flow direction cannot be avoided, the regeneration degree of alkali in the regenerator is lower than that in the multistage regenerators.

If plural kinds of gases having different gas components from each other can be utilized as a regenerating gas, then individual regenerators serve as regenerators having different purposes by providing independent regenerators which can deal with respective regenerating gases. Further, by using the respective regenerators sequentially in a fully worked-out order, a high-quality regeneration can be achieved.

Further, in an acid gas scrubbing apparatus according to the present invention, a gas scrubber and a scrubbing liquid regenerator may be divided into a two-stage constitution, respectively. Specifically, the acid gas scrubbing apparatus may comprise a first gas scrubbing section in which a gas to be scrubbed is brought into contact with a first gas'scrubbing liquid containing first alkaline agent in a countercurrent flow, a second gas scrubbing section in which the scrubbed gas discharged from the first gas scrubbing section is brought into contact with a second gas scrubbing liquid containing second alkaline agent in a countercurrent flow, a first scrubbing liquid regenerator in which a first regenerating gas having different components from those of the gas to be scrubbed is brought into contact with the first gas scrubbing liquid, a second scrubbing liquid regenerator in which a second regenerating gas having different components from those of the gas to be scrubbed is brought into contact with the second gas scrubbing liquid, a circulating means provided between the first gas scrubbing section and the first scrubbing liquid regenerator for circulating the first scrubbing liquid, and a circulating means provided between the second gas scrubbing section and the second scrubbing liquid regenerator for circulating the second scrubbing liquid.

**Brief Description of Drawings**

FIG. 1 is a schematic view showing a basic embodiment of the present invention;
FIG. 2 is a schematic view showing an improved embodiment of the present invention in which the constitution of equipments is simplified;
FIG. 3 is a schematic view showing a basic embodiment of the present invention in which regenerators are provided in a two-stage;
FIG. 4 is a schematic view showing an improved embodiment of the present invention in which regenerators are provided in a two-stage;
FIG. 5 is a schematic view showing a first embodiment of a gasification system of combustibles which utilizes the present invention;
FIG. 6 is a schematic view showing an embodiment in which regenerators are provided in a two-stage in a gasification system of combustibles which utilizes the present invention;
FIG. 7 is a schematic view showing a first embodiment of a fuel cell power generation system by gasification of combustibles which utilizes the present invention;
FIG. 8 is a schematic view showing a second embodiment of a fuel cell power generation system by gasification of combustibles which utilizes the present invention;

FIG. 9 is a schematic view showing a first specific example of the present invention in a second embodiment of a fuel cell power generation system by gasification of combustibles which utilizes the present invention;

FIG. 10 is a schematic view showing a second specific example of the present invention in a second embodiment of a fuel cell power generation system by gasification of combustibles which utilizes the present invention;

FIG. 11 is a schematic view showing a third embodiment of a fuel cell power generation system by gasification of combustibles which utilizes the present invention;

FIG. 12 is a schematic view showing a specific example of the present invention in a third embodiment of a fuel cell power generation system by gasification of combustibles which utilizes the present invention;

FIG. 13 is a schematic view showing a third specific example of the present invention in a second embodiment of a fuel cell power generation system by gasification of combustibles which utilizes the present invention;

FIG. 14 is a schematic view showing a basic example of the present invention in which scrubbers and regenerators are provided in a two-stage, respectively;

FIG. 15 is a schematic view showing a third embodiment of the present invention in which scrubbers and regenerators are provided in a two-stage, respectively;

FIG. 16 is a schematic view showing a fourth embodiment of a fuel cell power generation system by gasification of combustibles which utilizes the present invention;

FIG. 17 is a schematic view showing a typical embodiment of a gasification step in a fourth embodiment of a fuel cell power generation system by gasification of combustibles which utilizes the present invention;

FIG. 18 is a schematic view showing a raw material feeder in a fourth embodiment of a fuel cell power generation system by gasification of combustibles which utilizes the present invention;

FIG. 19 is a schematic view showing another example of a raw material feeder in a fourth embodiment of a fuel cell power generation system by gasification of combustibles which utilizes the present invention; and

FIG. 20 is a schematic view showing a typical embodiment of a gasification step and a hydrogen purifying step in a fifth embodiment of a fuel cell power generation system by gasification of combustibles which utilizes the present invention.

## Best Mode for Carrying Out the Invention

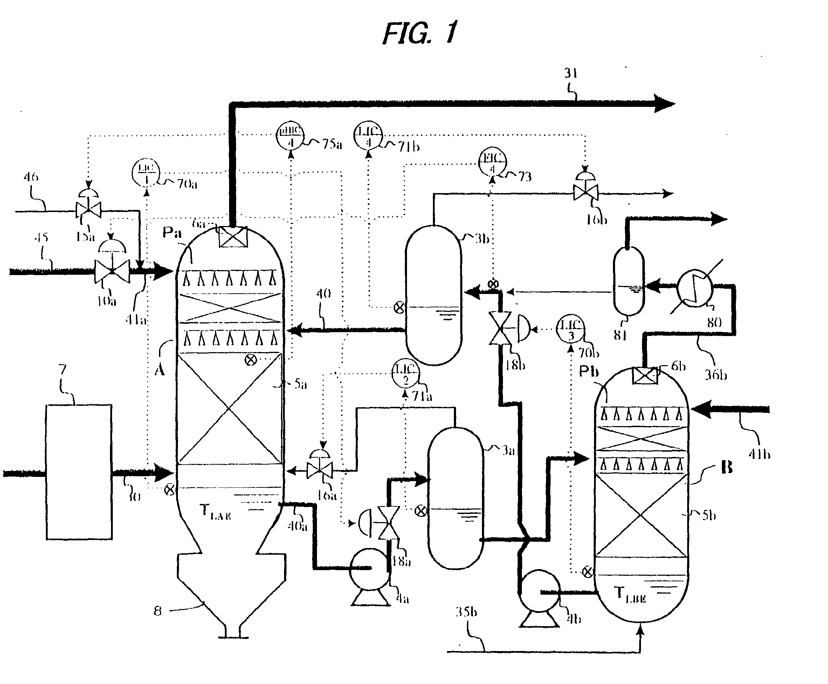

An embodiment of the present invention will be described with reference to FIG. 1 showing a first embodiment of the present invention. In embodiments shown in FIGS. 1 through 20, like or corresponding parts or elements are denoted by like or corresponding reference numerals throughout views, and repetitive description is eliminated. A gas 30, to be scrubbed, introduced from the lower part of a gas scrubber A into the gas scrubber A is brought into contact with a gas scrubbing liquid 40 containing alkaline agent supplied from the upper part of the gas scrubber A into the gas scrubber A and is cooled, and acid gases such as hydrogen sulfide, carbonyl sulfide, hydrogen chloride, sulfur oxides, nitrogen oxides, and carbon dioxide and dust are removed from the gas 30.

In the case where the gas to be scrubbed is exhaust gas generated by incineration of wastes containing chlorine such as municipal wastes, the temperature of the gas, to be scrubbed, supplied to the gas scrubber A is normally about 200°C. However, this temperature has passed through the temperature range of resynthesis of dioxins, i.e. around 300°C and around 470°C, and hence there is a high possibility that the gas to be scrubbed contains dioxins, and dioxins are transferred to the scrubbing liquid and condensed therein. Therefore, in the case of scrubbing exhaust gas generated by incineration of wastes containing chlorine such as municipal wastes, the temperature of the gas 30, to be scrubbed, supplied to the gas scrubber A is 480°C or higher, preferably 500°C or higher for the purpose of avoiding the temperature range of resynthesis of dioxins.

In the case where the gas to be scrubbed is a gasified gas obtained by pyrolysis and gasification of wastes containing chlorine such as municipal wastes, the possibility of resynthesis of dioxins is extremely low because of a reducing atmosphere. Therefore, the gas to be scrubbed may be supplied to the gas scrubber A at a temperature of about 200°C, preferably 300°C or higher, more preferably 350°C or higher, and still more preferably 500°C or higher.

Although both of organic alkali and inorganic alkali may be supplied to the scrubbing liquid as alkaline agent, it may be better to use inorganic alkaline compound from viewpoint of thermal stability. Particularly, hydroxide of alkali metal such as sodium hydroxide or potassium hydroxide is desirable. Further, carbonate of alkali metal such as sodium carbonate or potassium carbonate may be used. As an example, in the case of using $K_2CO_3$ as alkaline agent, absorption reaction formulas in the gas scrubber are expressed as follows:

$$K_2CO_3 + H_2S \rightarrow KHS + KHCO_3 \qquad (1)$$

$$K_2CO_3 + H_2O + COS \rightarrow KHS + KHCO_3 + CO_2 \qquad (2)$$

$$K_2CO_3 + HCl \rightarrow KHCO_3 + KCl \qquad (3)$$

$$K_2CO_3 + SO_2 + H_2O \rightarrow KHCO_3 + KHSO_3 \qquad (4)$$

$$K_2CO_3 + NO_2 + H_2O \rightarrow KHCO_3 + KHNO_3 \qquad (5)$$

$$K_2CO_3 + H_2O + CO_2 \rightarrow 2KHCO_3 \qquad (6)$$

Since the above absorption reaction is an exothermic reaction, the lower the temperature of the scrubbing liquid is, the more advantageous absorption is. For example, if a gas pressure is atmospheric pressure (1 atmosphere), it is sufficient for the temperature $T_{LAI}$ of the scrubbing liquid at the inlet of the gas scrubber A to be 100°C or lower.) However, the temperature $T_{LAI}$ of the scrubbing liquid at the inlet of the gas scrubber A is preferably 80°C or lower, more preferably in the range of 60 to 75°C so that steam which has been brought by the gas to be scrubbed is condensed as much as possible, as a result, partial pressure of carbon dioxide in gas-phase is kept high, and as much carbon dioxide as possible is absorbed in the scrubbing liquid.

The temperature $T_{LAE}$ of the scrubbing liquid at the lower part of the gas scrubber A is naturally higher than the temperature of the scrubbing liquid at the upper part of the gas scrubber A because the scrubbing liquid is heated by the gas to be scrubbed, and the temperature difference between $T_{LAE}$ and $T_{LAI}$ is 20°C or lower, preferably 10°C or lower. The reason why there is a limit to this temperature difference is that if $T_{LAE}$ is excessively high, carbon dioxide which has been absorbed by the scrubbing liquid is desorbed again in the lower part of the gas scrubber A, and an absorption capability of carbon dioxide in the gas scrubber A is lowered. The control of this temperature difference is performed by adjusting the amount of the circulating scrubbing liquid. In the lower part of the gas scrubber A, steam contained in the gas 30 to be scrubbed is rapidly cooled by contact with the scrubbing liquid and is condensed, and then further condensed due to temperature drop while flowing upwardly. Therefore, even if absorption of $CO_2$ proceeds in the absorption tower, lowering of the partial pressure of $CO_2$ is small and the partial pressure of $CO_2$ is kept high. Thus, $CO_2$ absorption driving force of the scrubbing liquid is kept high, and the absorption effect is enhanced.

In this manner, by condensation of steam contained in the gas in the gas scrubber A, latent heat of steam can be recovered and $CO_2$ absorption effect in the gas scrubber A can be increased. Therefore, it is important to keep the temperature $T_{LAI}$ of the scrubbing liquid at the inlet of the gas scrubber A, the temperature $T_{LAE}$ of the scrubbing liquid at the lower part of the gas scrubber A, and the temperature difference between $T_{LAE}$ and $T_{LAI}$, in a proper range, respectively. As it is known from the above, with regard to components of the gas 30 to be scrubbed, if $CO_2$ content is constant, as steam content is higher, i.e. the rate of carbon dioxide in a dry gas is higher, absorption condition of $CO_2$ in the gas scrubber of the present invention is more advantageous. The scrubbed gas 30 is further scrubbed by a make-up scrubbing liquid 41a, comprising a relatively clean make-up liquid 45a and alkaline agent 46 added to the make-up liquid 45a, which is supplied as a make-up liquid, and then mist in the gas 30 is removed in a mist separator 6a, resulting in a clean scrubbed gas 31. In the case where the gas 30 to be scrubbed is incineration exhaust gas, prevention of white plume emission such as removal of condensed water by cooling is applied to the scrubbed gas 31, and then the scrubbed gas 31 is released to the atmosphere. If the gas 30 to be scrubbed is a useful gas containing combustible gas components, the scrubbed gas 31 can be utilized in various ways such as a fuel gas.

In order to increase the efficiency of contact of the gas to be scrubbed with the scrubbing liquid, it is desirable that the scrubbing liquid is supplied by a spraying system so that a contacting surface area in the liquid side which contacts gas is increased and the scrubbing liquid is spread over the entire surface of the gas passage within the gas scrubber A. However, the efficiency of gas-liquid contact may be increased by charging the gas scrubber A with a packing 5a for promotion of contact without a special means for supplying a scrubbing liquid. Naturally, it is more preferable that the scrubbing liquid is supplied by the spraying system and a packing for promotion of contact is used.

The scrubbing liquid 40a which is withdrawn from the lower part of the gas scrubber A is supplied to a regenerator B by a circulating pump 4a. If dust is contained in the gas to be scrubbed, it is necessary to take measures so as to accompany as little dust as possible when the scrubbing liquid is withdrawn from the gas scrubber. For example, the scrubbing liquid may be withdrawn from the side of the lower part of the gas scrubber A, and a settling tank 8 for precipitating and separating solid content such as dust may be provided at the location below the gas scrubber A in a vertical direction. If a concentration of dust in the gas 30 to be scrubbed is high and a load of dust flowing into the gas scrubber A is excessively large, then it is desirable that a dry-type dust collector 7 such as a cyclone, a bag filter, or a ceramic filter is provided upstream of the gas scrubber A to reduce the load of dust on the gas scrubber.

A regenerating gas 35b is supplied into the regenerator B from the lower part thereof, and a gas-liquid contact between the regenerating gas 35b and the scrubbing liquid is carried out in the same manner as the gas scrubber A. Heat exchange between the regenerating gas 35b and the scrubbing liquid is performed, and various gas components which had been contained in the gas to be scrubbed and have been dissolved in the scrubbing liquid, and steam contained in the scrubbing liquid are released so as to keep gas-liquid equilibrium, i.e. saturated state in the gas temperature at the outlet of the regenerator B, and hence the regenerating gas accompanied by such gases is discharged as a regenerator vent gas 36b. The regenerating gas 35b is brought into contact with the scrubbing liquid, and then further purified by the make-up scrubbing liquid 41b. Further, mist in the regenerator vent gas 36b is removed by a mist separator 6b. Because the regenerator vent gas 36b accompanies a large amount of steam, if an amount of evaporation in the regenerator is large and the scrubbing liquid is liable to be decreased, then, if necessary, a cooler may be provided to condense steam and reutilize the condensed water as a scrubbing liquid. Because the condensed water is much cleaner than the scrubbing liquid, such condensed water may be utilized as a make-up liquid 45a.

Steam and carbon dioxide are desorbed and released from the scrubbing water (scrubbing liquid) in the regenerator B. If the residence time of the regenerating gas in the regenerator B is sufficiently long, water is vaporized to generate steam until steam reaches saturation concentration in the operating temperature of the regenerator B, and as dry gas components, the components of the gas, to be scrubbed, which are dissolved in alkaline scrubbing water (scrubbing liquid) are desorbed and released until such components of the gas reach desorption and absorption equilibrium concentration with the regenerating gas flowing in the regenerator B. The main component of dry gas desorbed and released in the regenerator B is carbon dioxide, and a pH of the scrubbing liquid is rapidly recovered by releasing of carbon dioxide. Thus, acid gases absorbed in the scrubbing liquid are hardly desorbed and released.

An alkaline regeneration reaction in the regenerator B is represented by the following formula (7). Further, in order to prevent the absorbed acid gases from being desorbed, an oxidizing agent is injected into the scrubbing liquid to oxidize reductants such as sulfur compounds. As an oxidizing agent, chlorine-based oxidizing agent such as sodium hypochlorite or chlorine dioxide, bromine-based oxidizing agent such as sodium hypobromite, and active oxygen-based oxidizing agent such as hydrogen peroxide or ozone may be used. In the case where sodium hypochlorite (NaClO) is used as an oxidizing agent, the reaction is represented by the formulas (8) to (10).

$$2KHCO_3 \rightarrow K_2CO_3 + H_2O + CO_2 \tag{7}$$

$$KHS + 4NaClO \rightarrow KHSO_4 + 4NaCl \tag{8}$$

$$KHSO_3 + NaClO \rightarrow KHSO_4 + NaCl \tag{9}$$

$$2KHNO_3 + NaClO \rightarrow 2KNO_3 + NaCl + H_2O \tag{10}$$

Vaporization of water content from the scrubbing liquid in the regenerator B deprives the scrubbing liquid of latent heat of vaporization to cool the scrubbing liquid.

Further, because carbon dioxide is desorbed and released from the scrubbing water (scrubbing liquid) in the regenerator B, alkaline agent in the scrubbing liquid which has combined with carbon dioxide is released again, and alkalinity of the scrubbing liquid is recovered. Therefore, release of acid gas components such as hydrogen sulfide, carbonyl sulfide, hydrogen chloride, sulfur oxides, and nitrogen oxides in the regenerator B which are dissolved in the scrubbing liquid can be suppressed, and the scrubbing liquid whose alkalinity is recovered is circulated again in the gas scrubber A, and hence alkaline agent can be circulated and utilized.

As the regenerating gas 35b introduced into the regenerator B, any component may be sufficient as far as such component is gaseous, and mainly air, oxygen, nitrogen, argon, steam, hydrogen, carbon monoxide, carbon dioxide, and a mixture of two or more of the above gases may be selected and used according to the purposes. When the regenerating gas is selected, a gas whose partial pressure of gas components to be desorbed in the regenerator is as low as possible should be selected. For example, for the purpose of desorption of carbon dioxide, the gas having as low content of carbon dioxide as possible should be selected. For the purpose of cooling the scrubbing liquid, or increasing the amount of recovered steam, the gas having as low content of steam as possible should be selected.

Further, in the case where the regenerator vent gas is supplied to the gasification step, the gas whose oxygen concentration is as high as possible should be used.

The temperature $T_{LBE}$ of the scrubbing liquid in the lower part of the regenerator B can be set freely according to the purposes. The temperature control of $T_{LBE}$ is determined by the flow rate, temperature and humidity of the regenerating gas 35b, and the flow rate of the circulating scrubbing liquid. If the flow rate, temperature, and humidity of the regenerating gas 35b are constant, the temperature control of $T_{LBE}$ is normally carried out by controlling the flow rate of the scrubbing liquid. If the amount of saturated steam generated and the amount of carbon dioxide desorbed and released should be large, then $T_{LBE}$ should be kept as high as possible. However, since generation of steam deprives the scrubbing liquid of latent heat, $T_{LBE}$ becomes to be lower than $T_{LBI}$ (temperature of the scrubbing liquid at the inlet of the regenerator B). Therefore, in order to make $T_{LBE}$ be in accordance with desired $T_{LAI}$, if necessary, a heat exchanger may be provided at the lower part of the regenerator to heat or cool the scrubbing liquid.

As described above, cooling of the scrubbing liquid by the regenerating gas 35b is performed by direct heat exchange of sensible heat and depriving the scrubbing liquid of latent heat of vaporization of steam accompanied by the regenerator vent gas 36b. If this cooling capability exceeds calorific value recovered from the gas 30 to be scrubbed, the temperature control of $T_{LBE}$ can be performed just by adjusting the flow rate of circulating scrubbing liquid. If the above cooling capability is smaller than calorific value recovered from the gas 30 to be scrubbed, a cooling means for cooling the scrubbing liquid is necessary besides the regenerator B.

In the case where the scrubbing liquid is supplied from the gas scrubber A to the regenerator B, a gas-liquid separator 3a is preferably provided to remove the gas components to be scrubbed as much as possible which have been mixed into the scrubbing liquid without being dissolved. Particularly, in the case where the gas to be scrubbed is combustible gas and the regenerating gas is oxygen-containing gas, the function of gas-liquid separator is particularly important for preventing explosion.

The gas components separated by the gas-liquid separator 3a has substantially the same components as the gas components to be scrubbed, and the scrubbing water (scrubbing liquid) flowing from the gas scrubber A into the gas-liquid separator 3a has the lowest pH in the circulating passage of the scrubbing water (scrubbing liquid) due to dissolution of carbon dioxide in the scrubbing liquid. Because acid gases absorbed in the scrubbing liquid tend to be released, the separated gas components should be returned to the most upstream portion of the flow of the gas to be scrubbed in the gas scrubber A and be scrubbed again.

In the regenerator B, carbon dioxide is released from the scrubbing liquid, and the scrubbing liquid is cooled by vaporization of water content, and then the cooled scrubbing liquid is introduced into the gas scrubber A again. However, if dust is contained in the gas to be scrubbed, in some cases, the scrubbing liquid accompanies a large amount of dust components. Thus, it is necessary for the scrubbing liquid to accompany as little dust as possible when the scrubbing liquid is withdrawn from the regenerator B as with the gas scrubber A.

Further, in the case where the scrubbing liquid is returned from the regenerator B to the gas scrubber A, a gas-liquid separator 3b is preferably provided to remove regenerating gas components as much as possible which have been mixed into the scrubbing liquid without being dissolved. Particularly, if the gas to be scrubbed is combustible gas and the regenerating gas is oxygen-containing gas, then the function of the gas-liquid separator is particularly important to prevent mixing of oxygen and the combustible gas.

The gas components separated in the gas-liquid separator 3b comprise regenerating gas components into which steam, and a trace amount of carbon dioxide depending on the condition are mixed, and hence such separated gas components can be mixed with the regenerating gas discharged from the regenerator B as they are.

Operating pressures of the gas scrubber A and the regenerator B according to the present invention can be freely selected according to the processes. In the embodiment shown in FIG. 1, the operating pressure Pb in the gas-phase section of the regenerator B can be freely set without depending on the operating pressure Pa in the gas-phase section of the gas scrubber A. As a pressure of the regenerator side is higher, the regenerator vent gas 36b can be more advantageously and effectively Utilized.

Conversely, if the operating pressure in the gas-phase section of the regenerator B is set to be lower than that in the gas-phase section of the gas scrubber A, although use of the regenerating gas is limited, the difference of partial pressure of carbon dioxide in the respective gas-phase sections of the gas scrubber A and the regenerator B becomes larger. Therefore, if the gas temperature at the outlet of the regenerator B is the same, the amount of released carbon dioxide is larger, and the regenerating function of alkaline agent is advantageously enhanced.

The control of an amount of the make-up liquid 45a comprising alkaline agent supplied to the gas scrubber A is carried out by measuring a pH of the scrubbing liquid to keep the pH of the scrubbing liquid at a given value. In order to perform such control properly, as shown in FIG. 1, newly replenished alkaline agent 46 and an inflow scrubbing liquid should be mixed with each other in the gas scrubber A, and the pH of the scrubbing liquid immediately after the mixing should be measured. This method allows the effect of make-up alkaline agent to be immediately confirmed, and hence the delay of control can be suppressed to the minimum.

The pH of the scrubbing liquid is desirable to be adjusted in the range of 7 to 14, preferably 9 to 12, and more preferably 10 to 11.

In FIG. 1, the reference numeral 10a represents a make-up liquid control valve, the reference numeral 15a represents an alkaline make-up amount control valve, the reference numerals 16a and 16b represent gas-liquid separator level control valves, and the reference numerals 18a and 18b represent level control valves. Further, the reference numerals 70a, 70b, 71a and 71b represent level adjusting devices, the reference numeral 73 represents a flow controller, and the reference numeral 75a represents a pH regulating device.

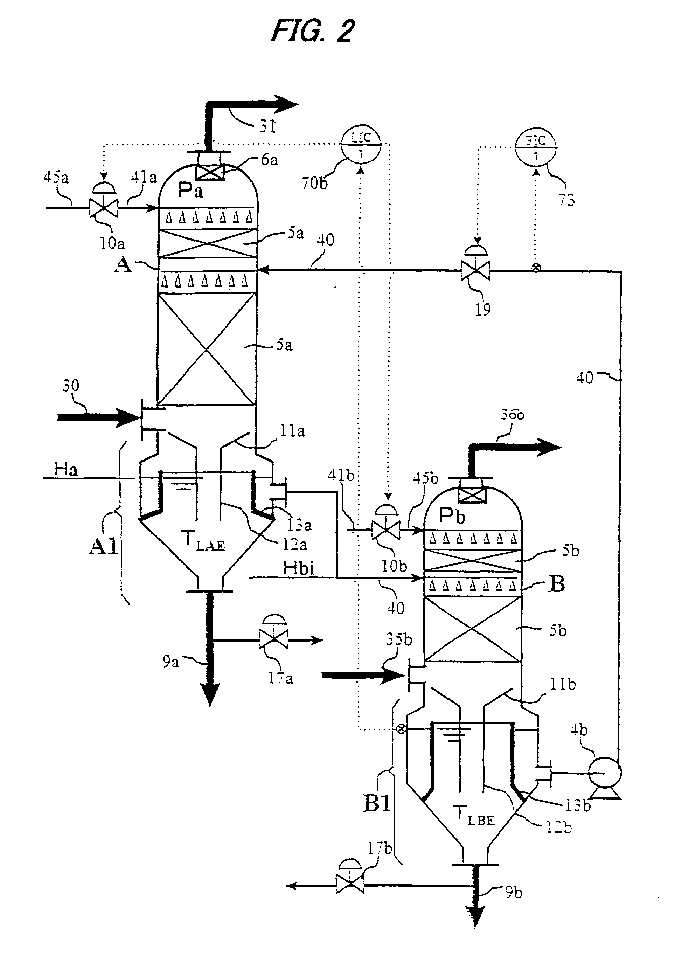

The embodiment shown in FIG. 1 is merely one embodiment of the present invention, and if there is a sufficient room for installation of the apparatus of the present invention in a vertical direction, then, as shown in FIG. 2, the gas scrubber A and the gas-liquid separator 3a, and the regenerator B and the gas-liquid separator 3b are integrated, respectively, thus reducing the number of equipments such as scrubbing liquid circulating pumps and simplifying the structure of the apparatus as much as possible. In this structure, the control of the amount of the scrubbing liquid in the acid gas scrubbing apparatus can be made only by measuring the liquid level of the scrubbing liquid remaining in the regenerator B and the amount of the circulating scrubbing liquid and controlling the amount of the make-up liquid supplied to the gas scrubber A, thus remarkably simplifying the structure of the apparatus.

In FIG. 2, a gas 30, to be scrubbed, which has flowed in the gas scrubber A is brought into contact with a circulating scrubbing liquid 40 and a make-up scrubbing liquid 41a comprising a make-up liquid 45a to which alkaline agent 46a is added, and scrubbed. The scrubbing liquid and the make-up liquid which have contacted and scrubbed the gas 30 are collected by a liquid-collecting plate 11a and flow in a gravity flow into a gas-liquid-solid separation section A1 at the lower part of the gas scrubber A. The lower end of a down flow pipe 12a connected to the lower part of the liquid-collecting plate 11a is located in the vicinity of the bottom of a retention water remaining in the gas-liquid-solid separation section A1, and the scrubbing liquid flowing downwardly is supplied to the location near the bottom of the retention water.

A weir 13a is provided in the gas-liquid-solid separation section A1, and the scrubbing liquid flows into the location near the bottom of the retention liquid, and overflows the weir 13a, and then is withdrawn from the gas scrubber A. SS (solid) components contained in the scrubbing liquid settles against an ascending flow of the scrubbing liquid to allow solid-liquid separation to be performed, and high concentration waste sludge 9a is recovered from the bottom of the gas scrubber A. Because the retention liquid level inside the weir 13a is always kept calm, gaseous matter is rapidly separated at the liquid level from the liquid.

The slower an ascending velocity of the scrubbing liquid in the gas-liquid-solid separation section A1 is, the higher a solid-liquid separation capability is, and this is advantageous. However, since a cross-sectional area of the apparatus becomes large, it is necessary to design in a suitable velocity range, and such ascending velocity is normally 50 mm/s or less, preferably 10 mm/s or less, and more preferably 5 mm/s or less. However, because colloidal SS content cannot be separated by a precipitating treatment, if a large amount of such SS content is contained, then it is necessary to provide a solid content removing means, which removes solid content from the scrubbing water (scrubbing liquid) and is different from a precipitating and separating means, such as a filtration treatment for treating a part of the scrubbing liquid using a separation membrane or a filter media.

In order to increase the solid-liquid separation effect, inorganic flocculant or organic and polymeric flocculant may be used for the purpose of flocculating of SS components. Further, when SS load is excessively high and solid-liquid separation cannot be easily performed by the precipitating method, the dry-type dust collector 7 such as a cyclone or a filter should be provided upstream of the gas scrubber A to remove dust components in the gas to be scrubbed.

The scrubbing liquid withdrawn from the gas scrubber A is supplied to the regenerator B in a gravity flow. At this time, when a sufficient difference of elevation can be ensured, the scrubbing liquid can be supplied to the regenerator B by the spraying system. However, when a sufficient difference of elevation cannot be ensured and a pressure loss of the circulating water is not allowable, the scrubbing liquid may be supplied to the upper part of the packing for promotion of contact provided in the regenerator B without providing a special means.

The gas-phase section pressure Pb [Pa] in the regenerator B is expressed in the following by using a gas-phase section pressure Pa [Pa] in the gas scrubber A, retention liquid level Ha [m] of the scrubbing liquid after overflowing the weir 13a, inlet level Hbi [m] of the scrubbing liquid in the regenerator B, specific gravity $\rho$ [kg/m$^3$] of the scrubbing liquid, gravitational acceleration g [m/s$^2$], and pressure loss $\Delta$ Pab [Pa] of the scrubbing liquid from the gas scrubber A to the regenerator B.

$$Pb = Pa + \rho \cdot g(Ha - Hbi) - \Delta Pab \qquad (11)$$

In the case where combustion exhaust gas discharged from a municipal waste incinerator operated at substantially atmospheric pressure is treated, Pa is kept in the range of atmospheric pressure or 2 kPa to 7 kPa, preferably 3 to 6 kPa, and more preferably about 4 to 5 kPa. Further, although Pb is changed according to the use of the regenerator vent gas, if the regenerator vent gas is utilized as a fluidizing gas of a fluidized-bed furnace, then Pb is preferable to be higher than atmospheric pressure by 20 to 50 kPa. Therefore, if expressed by absolute pressure, Pa is set to be in the range of 94 to 99 kPa, and Pb is set to be in the range of 121 to 151 kPa. If a fluidized-bed furnace is not used in a gasification step, a pressure for fluidization is not required, and hence even if the regenerator vent gas is utilized as a gasifying agent in the gasification step, Pb is such pressure obtained by adding a pressure corresponding to resistance in the supply pipe to the operating pressure in the gasification step.

A regenerating gas 35b having components according to the purposes is supplied to the regenerator B as with the regenerator shown in FIG. 1, and is brought into contact with a scrubbing liquid, and discharged. A gas-liquid-solid separation section B1 is provided in the lower part of the regenerator B as with the gas scrubber A. The scrubbing liquid which has contacted the regenerating gas 35b is collected by a liquid-collecting plate 11b and flows in a gravity flow into a gas-liquid-solid separation section B1 at the lower part of the regenerator B. The lower end of a down flow pipe 12b connected to the lower part of the liquid-collecting plate 11b is located in the vicinity of the bottom of a retention water remaining in the gas-liquid-solid separation section B1, and the scrubbing liquid flowing downwardly is supplied to the location near the bottom of the retention water.

A weir 13b is provided in the gas-liquid-solid separation section B1, and the scrubbing liquid flows into the location near the bottom of the retention liquid and overflows the weir 13b, and then is withdrawn from the regenerator B. SS (solid) components contained in the scrubbing liquid settles against an ascending flow of the scrubbing liquid to allow solid-liquid separation to be performed, and high concentration waste sludge 9b is recovered from the bottom of the regenerator B. Because the retention liquid level inside the weir 13b is always kept calm, gaseous matter is rapidly separated at the liquid level from the liquid, thus preventing the gaseous matter from being accompanied by the withdrawn scrubbing liquid.

In the regenerator B as well as the gas scrubber A, the slower an ascending velocity of the scrubbing liquid in the gas-liquid-solid separation section B1 is, the higher a solid-liquid separation capability is, and this is advantageous. However, since a cross-sectional area of the apparatus becomes large, it is necessary to design in a suitable velocity range, and such ascending velocity is normally 50 mm/s or less, preferably 10 mm/s or less, and more preferably 5 mm/s or less.

In order to increase the solid-liquid separation effect, inorganic flocculant or organic and polymeric flocculant may be used for the purpose of flocculating of SS components. Further, when SS load is excessively high and solid-liquid separation cannot be easily performed by the precipitating method, the dry-type dust collector such as a cyclone or a filter should be provided upstream of the regenerator B to remove dust components in the regenerating gas as in the gas scrubber A.

If the regenerating gas 35b is a gas containing no dust, solid-liquid separation is not necessary in the regenerator B, and withdrawal of sludge from the lowermost part is not necessary, and hence an internal structure of the regenerator B can be simplified. However, a gas-liquid separation function is necessary, and it is desirable that the regenerator B has such a structure as shown in FIG. 2 for the purpose of keeping a liquid surface in a calm state.

The scrubbing liquid withdrawn from the regenerator B is returned to the gas scrubber A by the circulating pump 4b. Here, a method for controlling the amount of the scrubbing liquid is as follows: The liquid level of the scrubbing liquid after overflowing the weir 13b in the regenerator B is measured, and the measured liquid level is converted to electrical signals, and then such signals are inputted into the level adjusting device 70b. The level adjusting device 70b outputs, if replenishment of the scrubbing liquid is necessary, signals for opening the make-up liquid control valve 10a and closing the waste liquid control valve 17a so that liquid level becomes a predetermined value. The level adjusting device 70b outputs, if the amount of scrubbing liquid increases and the scrubbing liquid is required to be discharged from the circulating system, signals for closing the make-up liquid control valve 10a and opening the waste liquid control valve 17a.

The make-up liquid may be supplied to the regenerator B and the waste liquid may be discharged. Particularly, in the case of producing reaction precipitate in the regenerator, withdrawal of waste liquid and sludge from the regenerator B is not necessary. Further, in the regenerator B as well as the gas scrubber A, a fresh make-up liquid is supplied to the most downstream side of a regenerating gas flow in the regenerator, and hence the cleaning effect of the regenerating gas discharged from the regenerator B is enhanced, and utility value of this gas is further increased.

When the make-up liquid is supplied to the regenerator B, and the waste liquid is discharged from the regenerator B, the level control signals are sent from the level adjusting device 70b to the make-up liquid control valve 10b and the waste liquid control valve 17b, and the make-up liquid control valve 10b and the waste liquid control valve 17b are operated in the same manner as the make-up liquid control valve 10a and the waste liquid control valve 17a, thereby controlling the amount of the circulating scrubbing liquid. In FIG. 2, the reference numerals 5a and 5b represent packing for promotion of contact. Further, the reference numeral 19 represents a circulating scrubbing liquid flow rate control valve, and the reference numeral 41b represents a make-up scrubbing liquid.

By constructing the system in a gravity flow manner as in the embodiment shown in FIG. 2, the process is simplified, the number of control systems is reduced, and the stability of the system is enhanced.

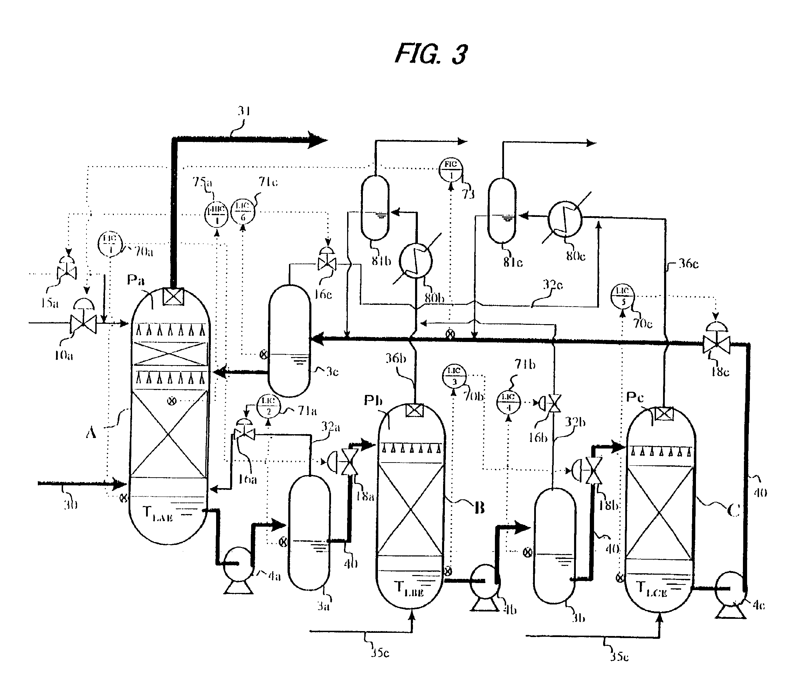

FIG. 3 shows a second embodiment of the present invention in which regeneration of alkaline agent is performed in a two-stage regenerator comprising the regenerator B and a second regenerator C to enhance a regeneration function of alkaline agent. The function of equipments up to the first regenerator B is the same as explained in FIG. 1. The scrubbing liquid withdrawn from the first regenerator B is supplied to the second regenerator C. A regenerating gas 35c having components according to the purposes is supplied to the second regenerator C as with the regenerator B, and the regenerating gas 35c is brought into contact with the scrubbing liquid, and then the gas which accompanies saturated steam and desorbed carbon dioxide is discharged to the outside of the system as a regenerator vent gas 36c. The structure of the second regenerator C is basically the same as that of the regenerator B, and the scrubbing liquid withdrawn from the second regenerator C is returned to the gas scrubber A again.

In FIG. 3, the reference numeral 10a represents a make-up liquid control valve, the reference numeral 15a represents an alkaline make-up amount control valve, the reference numerals 16a, 16b and 16c represent gas-liquid separator level control valves, and the reference numerals 18a, 18b and 18c represent level control valves. Further, the reference numerals 70a, 70b, 70c, 71a, 71b and 71c represent level adjusting devices, the reference numeral 73 represents a flow controller, and the reference numeral 75a represents a pH regulating device.

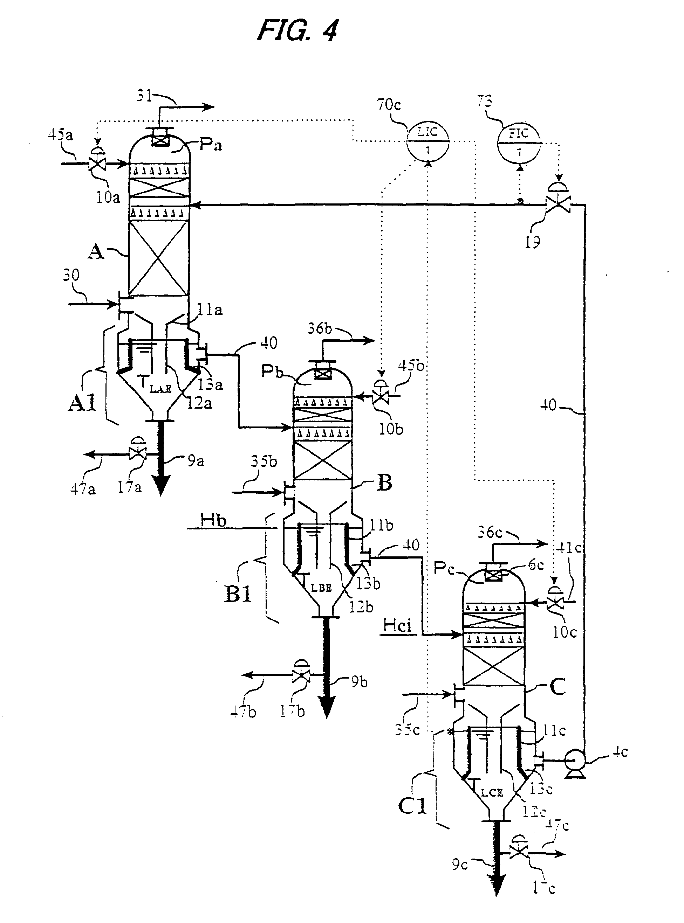

The embodiment shown in FIG. 3 is merely one embodiment of the present invention, and if there is a sufficient room for installation of the apparatus of the present invention in a vertical direction, then, as shown in FIG. 4, the gas scrubber A and the gas-liquid separator 3a, the regenerator B and the gas-liquid separator 3b are integrated, and the regenerator C and the gas-liquid separator 3c are integrated, respectively, thus reducing the number of equipments such as scrubbing liquid circulating pumps and simplifying the structure of the apparatus as much as possible.

In FIG. 4, the scrubbing liquid withdrawn from the regenerator B is supplied to the second regenerator C in a gravity flow. In this case also, when a sufficient difference of elevation between the scrubbing liquid level of the first regenerator B and the scrubbing liquid level of the second regenerator can be ensured, the scrubbing liquid can be supplied to the second regenerator C by the spraying system. However, when a sufficient difference of elevation cannot be ensured and a pressure loss of the circulating water is not allowable, the scrubbing liquid may be supplied to the upper part of the packing 5c for promotion of contact provided in the second regenerator C without providing a special means.

The gas-phase section pressure Pc [Pa] in the second regenerator C is expressed in the following by using a gas-phase section pressure Pb [Pa] in the first regenerator B, retention liquid level Hb [m] of the scrubbing liquid after overflowing the weir 13b, inlet level Hci [m] of the scrubbing liquid in the second regenerator C, specific gravity $\rho$ [kg/m$^3$] of the scrubbing liquid, gravitational acceleration g [m/s$^2$], and pressure loss $\Delta$ Pbc [Pa] of the scrubbing liquid from the regenerator B to the second regenerator C.

$$Pc = Pb + \rho g(Hb - Hci) - \Delta Pbc \qquad\qquad (12)$$

A regenerating gas 35c having components according to the purposes is supplied to the second regenerator C as with the above regenerator B, and is brought into contact with a scrubbing liquid, and discharged. A gas-liquid-solid separation section C1 is provided in the lower part of the second regenerator C as with the regenerator B. The scrubbing liquid which has contacted the regenerating gas 35c is collected by a liquid-collecting plate 11c and flows in a gravity flow into a gas-liquid-solid separation section C1 at the lower part of the second regenerator C. The lower end of a down flow pipe 12c connected to the lower part of the liquid-collecting plate 11c is located in the vicinity of the bottom of a retention water remaining in the gas-liquid-solid separation section C1, and the scrubbing liquid flowing downwardly is supplied to the location near the bottom of the retention water.

A weir 13c is provided in the gas-liquid-solid separation section C1, and the scrubbing liquid flows into the location near the bottom of the retention liquid, and overflows the weir 13c, and then is withdrawn from the second regenerator C. SS (solid) components contained in the scrubbing liquid settles against an ascending flow of the scrubbing liquid to allow solid-liquid separation to be performed, and high concentration waste sludge 9c is recovered from the bottom of the second regenerator C. Because the retention liquid level inside the weir 13c is always kept calm, gaseous matter is rapidly separated at the liquid level from the liquid, thus preventing the gaseous matter from being accompanied by the withdrawn scrubbing liquid.

In the second regenerator C as well as the first regenerator B, the slower an ascending velocity of the scrubbing liquid in the gas-liquid-solid separation section C1 is, the higher a solid-liquid separation capability is, and this is advantageous. However, since a cross-sectional area of the apparatus becomes large, it is necessary to design in a suitable velocity range, and such ascending velocity is normally 50 mm/s or less, preferably 10 mm/s or less, and more preferably 5 mm/s or less. In order to increase the solid-liquid separation effect, inorganic flocculant or organic and polymeric flocculant may be used for the purpose of flocculating of SS components. However, because colloidal SS content cannot be separated by a precipitating treatment, if a large amount of such SS content is contained, then it is necessary to provide a solid content removing means, which removes solid content from the scrubbing water (scrubbing liquid) and is different from a precipitating and separating means, such as a filtration treatment for treating a part of the scrubbing liquid using a separation membrane or a filter media, as with the first regenerator B.

If the regenerating gas 35c is a gas containing no dust, solid-liquid separation is not necessary in the second regenerator C, and withdrawal of sludge from the lowermost part is not necessary, and hence an internal structure of the second regenerator C can be simplified. However, a gas-liquid separation function is necessary, and it is desirable that the second regenerator C has such a structure as in the gas scrubber A and the first regenerator B for the purpose of keeping a liquid surface in a calm state.

The scrubbing liquid withdrawn from the second regenerator C is returned to the gas scrubber A by the circulating pump. Here, a method for controlling the amount of the scrubbing liquid is as follows: The liquid level of the scrubbing liquid after overflowing the weir 13c in the second regenerator C is measured, and the measured liquid level is converted to electrical signals, and then such signals are inputted into the level adjusting device 70c. The level adjusting device 70c outputs, if replenishment of the scrubbing liquid is necessary, signals for opening the make-up liquid control valves 10a, 10b and 10c and closing the waste liquid control valves 17a, 17b and 17c so that liquid level becomes a predetermined value. The level adjusting device 70c outputs, if the amount of scrubbing liquid increases and the scrubbing liquid is required to be discharged from the circulating system, signals for closing the make-up liquid control valves 10a, 10b and 10c and opening the waste liquid control valves 17a, 17b and 17c. In FIG. 4, the reference numeral 6c represents a mist separator, and the reference numerals 36b and 36c represent a regenerator vent gas. Further, the reference numeral 41c represents a make-up scrubbing liquid.

As with the first and second regenerators, regenerators can be sequentially connected in a three-stage or more.

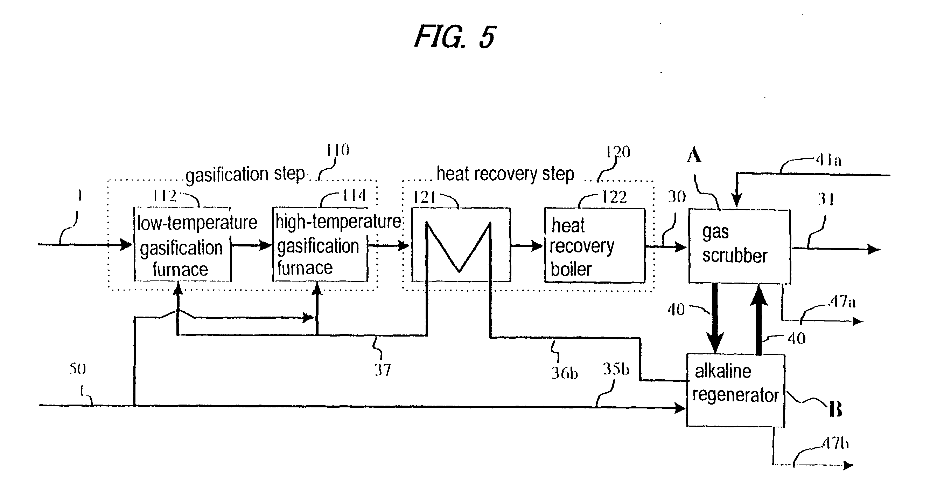

FIG. 5 shows an embodiment of a gasification system of combustibles which incorporates an acid gas removing apparatus of the present invention. The present embodiment relates to a system in which combustibles 1 which generate acid gases with being heated are gasified in a gasification step 110, and the produced gas is led to a heat recovery step 120 where heat recovery is performed, and then scrubbed in the gas scrubber A. In this embodiment, an oxidizing agent gas supplied to the gasification step is used as a regenerating gas in the alkaline regenerator B. The gasification step 110 comprises a two-stage gasification step in which a low-temperature gasification furnace 112 and a high-temperature gasification furnace 114 are used. The heat recovery step 120 incorporates a high-temperature heat exchanger 121 and a heat recovery boiler 122. An oxidizing agent 50 for a gasification step is supplied to the regenerator B as a regenerating gas, and the regenerator vent gas 36b contains regenerating gas components plus saturated steam and desorbed carbon dioxide, and they serve as a gasifying agent in the gasification step. As an oxidizing agent, air, oxygen-enriched air, highly enriched oxygen, and pure oxygen are normally used, but any gas may be used as far as such gas contains oxygen.

The regenerator vent gas 36b is preferably heated by heat exchange with a high-temperature produced gas after the gasification step. In the present embodiment, the regenerator vent gas 36b is led to a high-temperature heat exchanger 121 where a medium to be heated is adapted to be heated to a temperature of 500°C or higher, and the regenerator vent gas 36b is heated to a temperature of 500°C or higher, preferably 600°C or higher, and more preferably 700°C or higher in the high-temperature heat exchanger 121, and then the heated vent gas 37 is supplied to a gasification furnace. Further, as in the present embodiment, in the case where the gasification step incorporates a plurality of furnaces, and proper oxygen concentrations of the oxidizing agent supplied to the respective furnaces are different from each other, an oxidizing agent should be supplied to a heated vent gas to adjust oxygen concentration of the vent gas. In the present embodiment, the oxidizing agent 50 is supplied to the heated vent gas 37 to be supplied to the high-temperature gasification furnace 114.

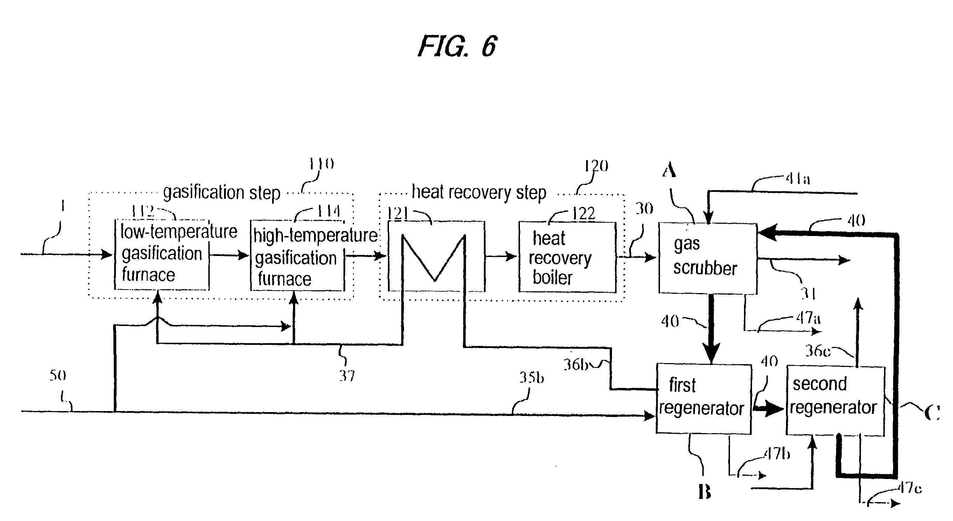

FIG. 6 shows a second embodiment of a gasification system of combustibles which incorporates an acid gas removing apparatus of the present invention. In the present embodiment, an acid gas removing apparatus which comprises two-stage regenerators (a first regenerator B and a second regenerator C) is utilized. As with FIG. 5, combustibles 1 which generate acid gases with being heated are gasified in a gasification step 110, and the produced gas is led to a heat recovery step 120 where heat recovery is performed, and then scrubbed in the gas scrubber A. The oxidizing agent 50 for a gasification step is once utilized as a regenerating gas for the first regenerator B, and the regenerator vent gas 36b is led to the high-temperature heat exchanger 121, and heated to a temperature of 500°C or higher, preferably 600°C or higher, and more preferably 700°C or higher in the high-temperature heat exchanger 121. Thereafter, the heated vent gas 37 is supplied to the gasification step as a mixed gas of an oxidizing agent and a gasifying agent. As an oxidizing agent 50, air, oxygen-enriched air, highly enriched oxygen, and pure oxygen are normally used, but any gas may be used as far as such gas contains oxygen.

In both of the embodiments shown in FIGS. 5 and 6, an oxidizing agent for a gasification step is used as a regenerating gas, and the gas scrubbing liquid is cooled, and the regenerator vent gas 36b is diluted with steam and carbon dioxide released from the scrubbing liquid to reduce oxygen concentration of the vent gas 36b. Therefore, even if the regenerator vent gas 36b is led to the high-temperature heat exchanger 121 as it is, the degree of corrosion of material caused by oxidation is alleviated, and saturated steam in the regenerator vent gas becomes superheated steam by being heated in the high-temperature heat exchanger 121. Therefore, drain attack caused by condensation of steam can be prevented and cold gas efficiency can be improved by recovering valuable high-temperature sensible heat and supplying it to the gasification step 110.

Particularly, in the embodiment shown in FIG. 6, any gas may be suitable as a regenerating gas 35c for the second regenerator C, and any gas which is least expensive and can be easily utilized according to the purposes may be used. Thus, the range of application is wide.

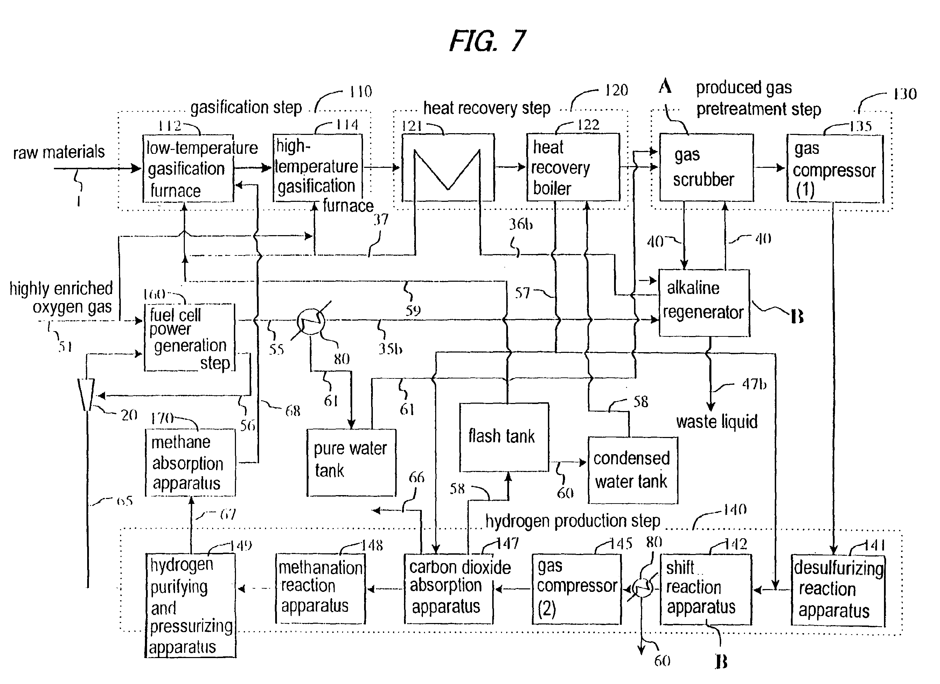

FIG. 7 shows an embodiment in which the present invention is applied to a fuel cell power generation process by gasification of combustibles. Materials (combustibles) 1 such as combustible wastes are supplied to a gasification step 110, and a high-temperature produced gas is sent to a heat recovery step 120 where sensible heat is recovered and the temperature of the produced gas is lowered to 200°C, preferably 350°C, and more preferably 500°C. The recovered sensible heat is used for generating steam or heating a gasifying agent. The produced gas whose temperature is lowered to 500°C is led to the gas scrubber A of the present invention in a produced gas pretreatment step 130, and acid gases are removed from the produced gas and the produced gas is cooled to a temperature of 60 to 90°C. If the amount of dust or components contained in the produced gas have a bad influence on the performance of the gas scrubber, then a dry-type dust collector such as a cyclone or a filter may be provided upstream of the gas scrubber, whereby the produced gas is led to the gas scrubber A after removing dust therefrom.

The gasification step 110 in FIG. 7 incorporates a two-stage gasification furnace comprising a low-temperature gasification furnace 112 and a high-temperature gasification furnace 114. In the low-temperature gasification furnace 112, materials are pyrolyzed and gasified at a temperature of 450 to 850°C, or 450 to 950°C depending on the cases. The low-temperature gasification furnace 112 preferably comprises a fluidized-bed furnace. In the high-temperature gasification furnace 114, organic components are completely gasified at a temperature of 1200 to 1500°C and ash content is slagged. The gasification step 110 may comprise any process as far as the gasification step 110 has a function for gasifying combustible components, and the gasification step 110 does not necessarily require a two-stage gasification as in the present embodiment.

In the embodiment shown in FIG. 7, the gas-phase section operating pressure Pa in the gas scrubber A corresponds to a pressure obtained by subtracting pressure loss caused by gas flow in the respective steps from operating pressure in the gasification step, and when the gasification step is operated at atmospheric pressure, the gas-phase section operating pressure Pa is in the range of atmospheric pressure to atmospheric pressure minus 10 kPa. However, because the operating pressure in the gasification step may be freely set, the operating pressure of the gas scrubber may be also freely set. If the operating pressure is set to be high, saturation temperature of the scrubbing liquid increases, and hence the temperature of the produced gas at the outlet of the gas scrubber can be set to any value whose upper limit is saturation temperature of the scrubbing liquid. In the case where a CO shift reaction step is provided in a hydrogen production step 140 provided at the downstream side, because the reaction temperature optimum for the shift reaction step is about 200°C, the temperature of the produced gas at the outlet of the gas scrubber may be raised to about 200°C by keeping the operating pressure of the gas scrubber at 1550 kPa or higher.

In the embodiment shown in FIG. 7, the gas-phase section operating pressure Pa in the gas scrubber is in the range of 95 to 99 kPa, and the produced gas is cooled to a temperature of 80°C or lower and pressurized by a first gas compressor 135 to a pressure of 200 to 800 kPa, and then supplied to the hydrogen production step 140. In order to reduce power consumption in the first gas compressor 135, a gas cooler may be provided downstream of the gas scrubber to condense and remove steam contained in the gas. The hydrogen production step 140 incorporates a desulfurizing reaction apparatus 141 for removing sulfur content in the produced gas; a shift reaction apparatus 142 for converting carbon monoxide and $H_2O$ in the produced gas into hydrogen and carbon dioxide by a shift reaction; a second gas compressor 145 for compressing the produced gas after the shift reaction; a carbon dioxide absorption apparatus 147 for absorbing and removing carbon dioxide in the produced gas; a methanation reaction apparatus 148 for producing methane by causing carbon monoxide and carbon dioxide remaining slightly in the produced gas after the carbon dioxide absorption to react with hydrogen; and a hydrogen purifying and pressurizing apparatus 149 which uses hydrogen-absorbing alloy and enhances purity of hydrogen by absorbing only hydrogen in the produced gas, and pressurizing the purified hydrogen. In order to remove carbon monoxide in the produced gas, a selective oxidation apparatus for combusting carbon monoxide selectively may be provided upstream of the carbon dioxide absorption apparatus 147, in place of the methanation reaction apparatus. In this case, the methanation reaction apparatus 148 is not necessary.

It is preferable to employ an amine absorption method in the carbon dioxide absorption apparatus 147. In the amine absorption method, the higher the pressure of gas flowing therein is, the larger difference of partial pressure of carbon dioxide between a pressure at the time of absorption and a pressure at the time of regeneration is, and this is advantageous. In the present embodiment, the second gas compressor 145 is provided to pressurize the produced gas to 800 kPa or higher and then supply the pressurized gas. If the first gas compressor can pressurize the gas sufficiently, the second gas compressor 145 is not necessary. If the second gas compressor 145 is provided, a gas cooler 80 should be provided downstream of the shift reaction apparatus 142 to condense and remove steam contained in the gas for thereby reducing power consumption of the second gas compressor 145.

A vent gas discharged from the hydrogen purifying and pressurizing apparatus 149 contains methane, nitrogen, argon, and a small amount of hydrogen, and only methane is absorbed by a methane absorption apparatus 170 and the remainder is discharged. The recovered methane gas is supplied to the gasification step 110, and reformed and refined again, thus becoming materials of hydrogen gas.

After the produced gas is purified into pure hydrogen by the hydrogen purifying and pressurizing apparatus 149, such pure hydrogen is supplied to a fuel cell power generation step 160. A fuel cell generates electricity, water and heat by reacting hydrogen with oxygen, and includes four types of fuel cell, a proton exchange membrane fuel cell, a phosphoric acid fuel cell, a molten carbonate fuel cell and a solid electrolyte fuel cell in order of operating temperature from low to high. FIG. 7 shows an example in which the proton exchange membrane fuel cell is used, but any fuel cell may be used as far as such fuel cell uses hydrogen or carbon monoxide as a fuel.

In general, air or pure oxygen is used as an oxidizing agent for supplying oxygen to a fuel cell, but any gas may be used as far as such gas contains oxygen basically, and does not contain poisonous components to the fuel cell. In the present embodiment, highly enriched oxygen gas which is purified by a PSA method or the like and has oxygen concentration of 80% or higher, preferably 90% or higher, and more preferably 93% or higher is used. Pure oxygen is better than highly enriched oxygen gas. In the case of oxygen gas produced by the PSA method, gas components other than oxygen are nitrogen and argon. In the embodiment shown in FIG. 7, highly enriched oxygen gas is used, about 50% of oxygen in the oxidizing agent supplied to the fuel cell is consumed in the fuel cell, and the remainder is discharged from an oxygen electrode as a vent gas 55. The vent gas 55 contains saturated steam according to temperature and pressure of the gas, and such saturated steam is recovered as a condensed water by cooling the vent gas to a temperature of 45 to 60°C by a vent gas cooler (gas cooler) 80. This condensed water is a substantially perfect pure water and has a very high utility value, and may be used as a make-up water in the gas scrubber, if there is no other uses.

Saturated aqueous vapor pressure at a temperature of 45 to 60°C is in the range of 10 to 20 kPa, and the cooled oxygen electrode vent gas contains 10 to 20% of steam at atmospheric pressure and is supplied to the regenerator as a regenerating gas.

Since the oxygen electrode vent gas 55 in the fuel cell does not contain carbon dioxide at all, such vent gas is suitable for alkaline regenerating gas in the regenerator B. In the present invention, the regenerator B is operated so as to allow the gas-phase section pressure Pb to be kept in the range of 120 to 140 kPa, and the regenerator vent gas 36b can accompany carbon dioxide whose concentration is 5% or more of gas total volume.

The temperature of the scrubbing liquid which flows into the regenerator is in the range of 70 to 99°C, and the oxygen electrode vent gas 55 is brought into contact with the scrubbing liquid in a countercurrent flow and heated by direct heat exchange to a temperature of 70 to 99°C. Saturated aqueous vapor pressure at a temperature of 70 to 99°C is in the range of 31 to 99 kPa. If the gas-phase section pressure Pb in the regenerator is 130 kPa, then the rate of steam in the regenerator vent gas is in the range of 24 (=31/130) to 76% (=99/130). Therefore, the oxygen electrode vent gas of the fuel cell which has been supplied as a regenerating gas carries away steam based on the difference of the rate of steam between the inlet of the regenerator and the outlet of the regenerator from the scrubbing water (scrubbing liquid), and the scrubbing water (scrubbing liquid) is cooled.

As described above, the regenerator vent gas components vary somewhat depending on the operating temperature of the regenerator, and contains about 5 to 10% of carbon dioxide, approximately the same amount of nitrogen and argon, 15 to 45% of oxygen, and 24 to 76% of steam. The gas having the above components is suitable for a mixed gas of an oxidizing agent and a gasifying agent supplied to the gasification step, and such gas may be supplied to the gasification step as it is, or the gasification step after adjustment of components suitable for the gasification step by adding steam or oxygen as necessary. Specifically, in the embodiment shown in FIG. 7, the regenerator B functions as if it is a gasifying agent generating apparatus. The reason why air is not used as an oxidizing agent in the fuel cell is that a large amount of nitrogen contained in air leads to an increase of power consumption in the first gas compressor 135 and the hydrogen production step 140. In the present embodiment, nitrogen and argon contained in the oxidizing agent are discharged to the outside of the system as a vent gas of the methane absorption apparatus 170.

By applying the present invention to the fuel cell power generation process by gasification, the following great effects can be obtained.

1. Because the gas scrubbing liquid supplied to the gas scrubber can be kept to a high pH by an alkaline regenerating function in the regenerator without consuming a large amount of alkaline agent, an acid gas absorption function in the gas scrubbing step is greatly enhanced, and durability of apparatuses constituting a hydrogen production step provided in the downstream side can be improved.
2. Because a scrubbing water (scrubbing liquid) can be cooled in the regenerator, just a small part of waste heat is supplied to a cooling tower, consumption of a make-up cooling water is reduced, and problems such as white plume and rainfall (mist fall to neighborhood) are reduced.
3. Since steam used as a gasifying agent in the gasification step can be recovered from the scrubbing liquid, high-quality steam is not required, and consumption of water and energy required for a water treatment can be reduced.

4. Compared with the conventional technology in which latent heat of low-pressure steam has been disposed in the cooling tower as waste heat, such heat can be returned to the gasification step, thus improving energy efficiency in the present invention.

5. Carbon dioxide is desorbed and recovered from the scrubbing liquid and supplied to the gasification step as a gasifying agent, and carbon dioxide has specific heat smaller than steam, and hence heat for temperature rising in the gasification step is small and cold gas efficiency is improved.

6. In the case where carbon dioxide is used as a gasifying agent, a gas containing a large amount of carbon monoxide having a higher utility value than hydrogen is produced, and hence the use of the produced gas is widened.

In the present embodiment, purified hydrogen is used as a fuel in a fuel cell, but the purified hydrogen is not limited to the fuel in the fuel cell, and the system in this embodiment from which the fuel cell power generation step is removed can be provided as a hydrogen production system for other use.

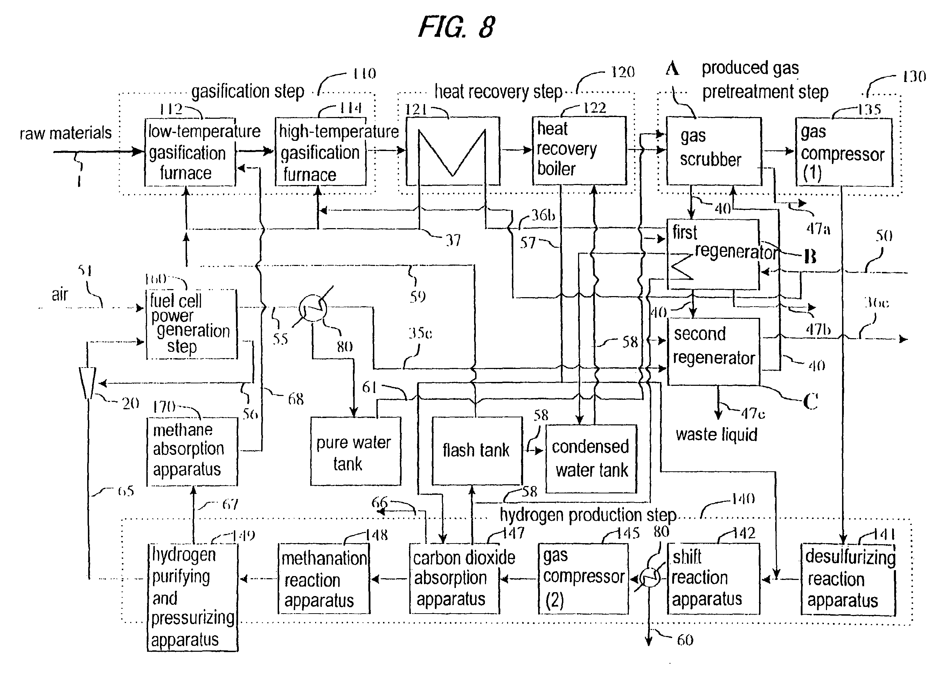

FIG. 8 is a block diagram showing an embodiment in which air is used as an oxidizing agent in a fuel cell. If the oxidizing agent in the fuel cell is air, an oxygen electrode vent gas of the fuel cell contains a large amount of nitrogen gas. This nitrogen gas does not serve as a gasifying agent in the gasification step, and increases power consumption in the subsequent hydrogen production step. Therefore, in this case, the supply of the oxygen electrode vent gas to the gasification step is not expedient.

Therefore, even if the oxidizing agent in the fuel cell is air, highly enriched oxygen gas whose oxygen concentration is 80% or higher, preferably 90% or higher, and more preferably 93% or higher, or pure oxygen gas should be used as an oxidizing agent in the gasification step. In this case, gases which can be used as regenerating gases in regenerators include the oxidizing agent in the gasification step and the oxygen electrode vent gas in the fuel cell. Thus, it is preferable that the regenerator is provided in a two-stage, and the respective gases are used as a regenerating gas for the first regenerator B and the second regenerator C. Next, an embodiment shown in FIG. 8 will be described below on condition that portion for which description is not made is the same as the embodiment shown in FIG. 7.

In the embodiment shown in FIG. 8, the oxidizing agent for a gasification step is used as a regenerating gas in the first regenerator B, and the oxygen electrode vent gas in the fuel cell is used as a regenerating gas in the second regenerator C. The first regenerator vent gas 36b is supplied to the gasification step 110 as a mixed gas of an oxidizing agent and a gasifying agent. The vent gas 36c of the second regenerator C contains about 5 to 10% of carbon dioxide and is discharged to the outside of the system. Attention should be given to carbon dioxide discharged to the outside of the system. In the case where the regenerator is a single stage as in the embodiment shown in FIG. 7, if the regenerator vent gas is supplied to the gasification step, then carbon dioxide contained in the regenerator vent gas is circulated again in the system, and there is a possibility that power consumption in the produced gas pretreatment step 130 and the hydrogen production step 140 is increased. This is because carbon dioxide serves as a gasifying agent in the gasification step as with steam, but carbon dioxide cannot be condensed and removed by cooling, unlike steam. Therefore, if proportion of carbon dioxide in the produced gas increases, an increase of the power in the gas compressor cannot be avoided.

Therefore, in the embodiment shown in FIG. 7, a carbon dioxide absorption apparatus is provided in a hydrogen production step, carbon dioxide is concentrated by an amine absorption method, and the concentrated carbon dioxide is discharged to the outside of the system. This amine absorption method requires a large amount of steam. In the embodiments shown in FIGS. 7 and 8, heat of 70 to 90°C generated in the fuel cell power generation step is utilized to drive an absorption-type chiller, and the generated cold heat is supplied to a carbon dioxide absorption step. In this case, by making the temperature difference between the cold heat and steam 57 serving as a heat source large, steam consumption in the carbon dioxide absorption apparatus can be stemmed as much as possible. At any rate, if the amount of carbon dioxide to be absorbed in the carbon dioxide absorption apparatus is reduced, the steam consumption can be stemmed. Specifically, as shown in FIG. 8, if the vent gas of the second regenerator C which contains carbon dioxide is discharged to the outside of the system, the steam consumption in the carbon dioxide absorption apparatus can be stemmed, and the energy consumption rate in the plant can be reduced.

Therefore, in the present embodiment, it is important to discharge carbon dioxide as much as possible together with the second regenerator vent gas 36c to the outside of the system. The method to obtain the maximum effect is that by lowering operating temperature of the gas scrubber A as much as possible, an absorption ability of carbon dioxide into the scrubbing liquid in the gas scrubber is enhanced, and desorption and releasing of carbon dioxide is suppressed in the first regenerator B as much as possible and saturated steam is generated. Further, the second regenerator C is operated at as high temperature as possible, and a gas-liquid contact with a regenerating gas is intensively made, and desorption and releasing of carbon dioxide is promoted. The purpose for suppressing the amount of carbon dioxide discharged from the first regenerator is that keeping carbon dioxide absorbed in the scrubbing liquid as much as possible and releasing it at a stretch in the second regenerator, the amount of carbon dioxide discharged to the outside of the system is increased as much as possible. Therefore, if necessary, a heat exchanger is provided to heat the scrubbing liquid. In this case, for this heating, steam generated in the heat recovery step or steam which has been generated in the heat recovery step and utilized to heat carbon dioxide absorption liquid in the carbon dioxide absorption step should be utilized.

Pure oxygen or highly enriched oxygen which is a regenerating gas in the first regenerator does not contain steam, and is suitable for a regenerating gas in the case where steam is generated as a gasifying agent. An oxygen electrode vent gas in the fuel cell which is a regenerating gas in the second regenerator has a temperature of about 75 to 90°C and contains saturated steam at the outlet of the fuel cell. Therefore, when the oxygen electrode vent gas in the fuel cell is used as a regenerating gas as it is, fresh steam is hardly generated in the second regenerator, and hence the cooling effect is hardly obtained. This is very advantageous to keep operating temperature of the second regenerator as high as possible. In the case where the cooling effect of the scrubbing water (scrubbing liquid) in the second regenerator is enhanced, the oxygen electrode vent gas should be cooled to condense steam contained therein. The condensed water is substantially pure water, and has high utility value and various uses. Further, when the oxygen electrode vent gas in the fuel cell has higher pressure than necessary, an aspirator may be provided to suck air, so as to increase the amount of regenerating gas, and enhance the regenerating effect.

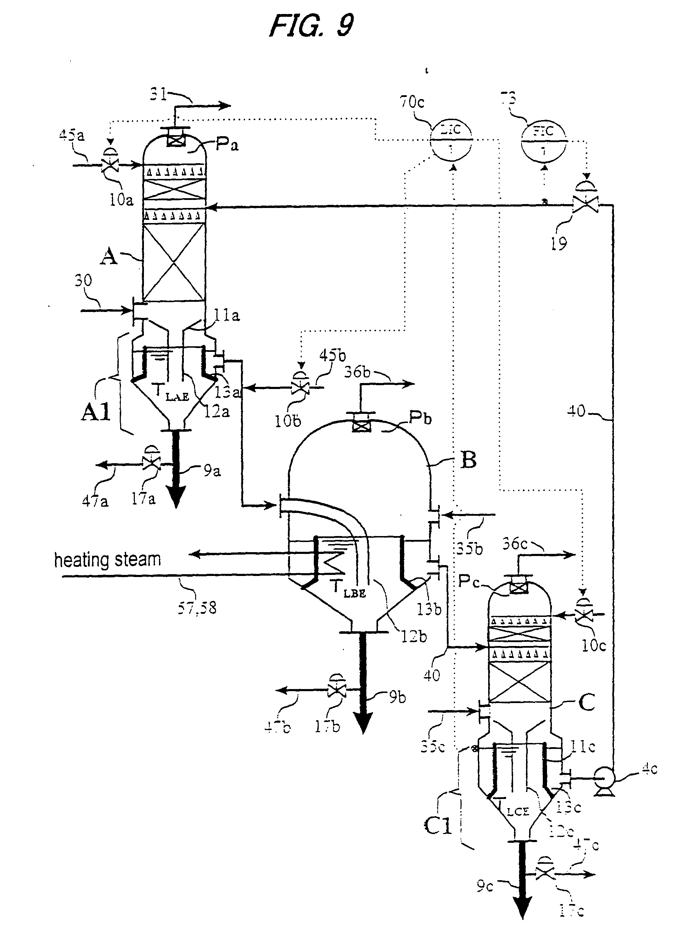

FIG. 9 shows an embodiment of a two-stage regeneration-type acid gas removing apparatus in the embodiment shown in FIG. 8. Although the two-stage regeneration-type acid gas removing apparatus shown in FIG. 3 or FIG. 4 may be used, as shown in FIG. 9, the first regenerator B is not a countercurrent flow-type regenerator but a complete mixing-type regenerator. This is because in the case of the countercurrent flow-type regenerator, the regenerator vent gas 36b accompanies steam and carbon dioxide according to equilibrium state with the scrubbing liquid at the inlet of the first regenerator, but the scrubbing liquid at the inlet of the first regenerator is heated in the gas scrubber A and absorbs carbon dioxide sufficiently, and hence carbon dioxide tends to be released, and if a large amount of carbon dioxide is released, then the amount of carbon dioxide discharged from the second regenerator to the outside is lowered, thus being contrary to the purpose in which as much carbon dioxide as possible is discharged to the outside of the system.

If the first regenerator B is a complete mixing-type regenerator shown in FIG. 9, the vent gas 36b accompanies steam and carbon dioxide according to gas-liquid equilibrium with the scrubbing liquid at the outlet of the first regenerator, and hence the amount of carbon dioxide which is accompanied by the vent gas 36b is smaller than that in the countercurrent flow-type regenerator and the amount of discharge to the outside of the system in the second regenerator increases.

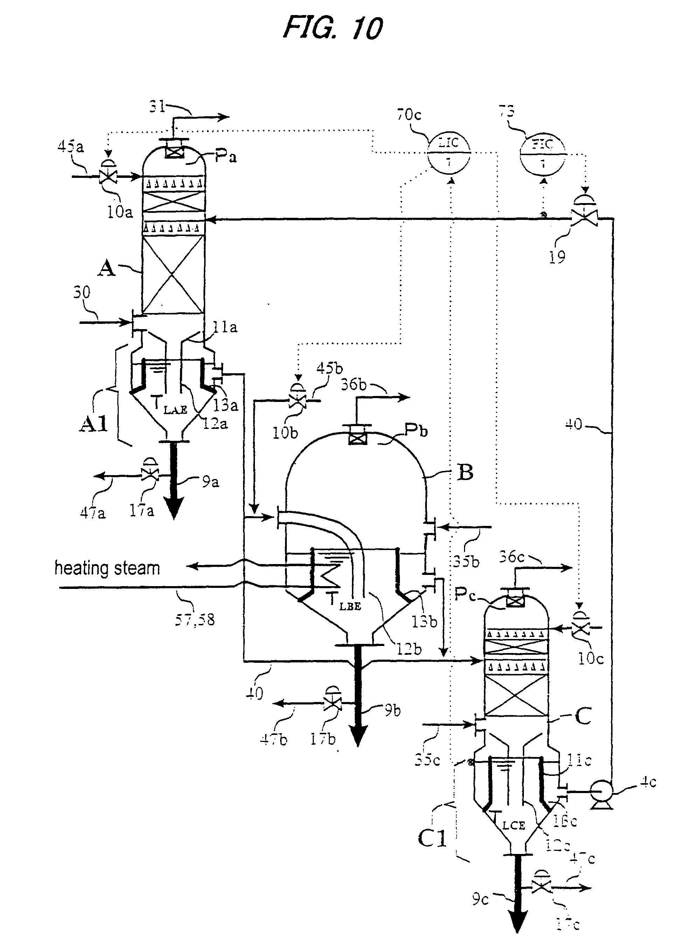

FIG. 10 shows an embodiment of a two-stage regeneration-type acid gas removing apparatus which is aimed at ensuring the amount of steam generated in the first regenerator B and suppressing the amount of carbon dioxide discharged from the first regenerator B. Only a part of the scrubbing liquid 40 is supplied to the first regenerator B and the remainder is supplied directly to the second regenerator C. In the first regenerator, a means for heating the scrubbing liquid is provided to raise the temperature of the scrubbing liquid for thereby promoting generation of steam. At the same time, carbon dioxide is released, and according to a trial calculation by the present inventors, in the case where combustibles having calorific value of about 13 MJ/kg are raw materials in the fuel cell power generation system by gasification shown in FIG. 8, the amount of circulating scrubbing liquid is about 150 t/h, and the amount of steam required as a gasifying agent in the gasification step can be supplied only by leading about 1%, or not more than 10% of the amount of the circulating, scrubbing liquid to the first regenerator. That is, 90 to 99% of carbon dioxide with a high-temperature is supplied to the second regenerator, and discharge of carbon dioxide to the outside of the system can be easily performed.

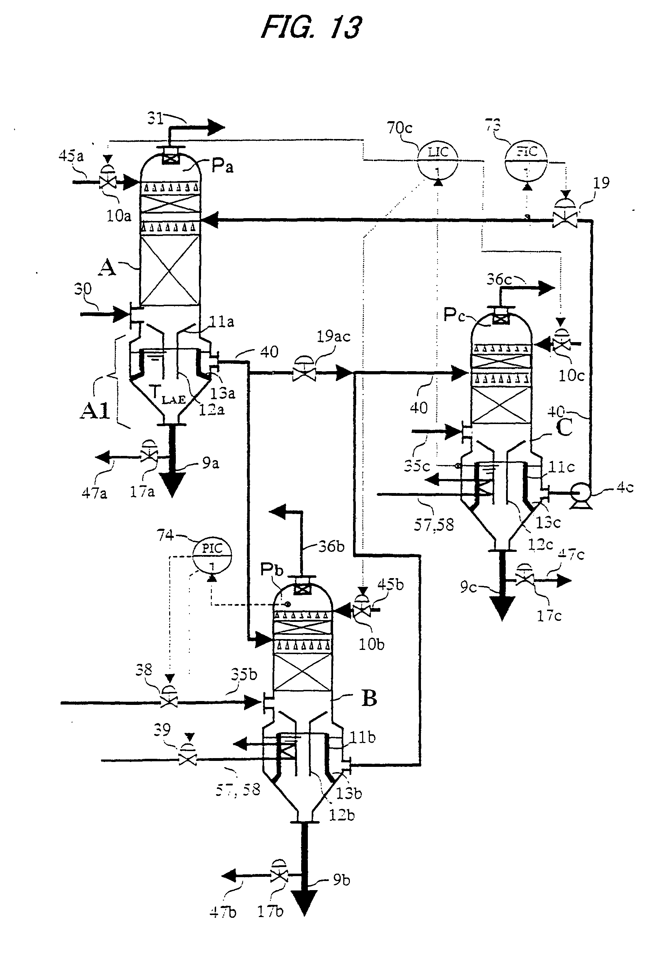

FIG. 13 shows an embodiment of the present invention in which steam and carbon dioxide are positively recovered from the scrubbing liquid and utilized as a gasifying agent. In the present embodiment, a vent gas 36b of the first regenerator is used as a gasifying agent in the gasification step. Since the vent gas is required to have a certain pressure for use as a gasifying agent, the gas-phase section pressure Pb in the first regenerator B is measured. The measured pressure signals are sent to a pressure regulator 74, and the pressure regulator 74 outputs manipulating signals for operating a regenerating gas flow rate control valve 38 and a heating steam flow rate control valve 39 in order to maintain a given pressure. If the pressure Pb is decreases to a certain value lower than a predetermined value, both of the regenerating gas flow rate control valve 38 and the heating steam flow rate control valve 39 are operated to be open. In the converse case, the regenerating gas flow rate control valve 38 and the heating steam flow rate control valve 39 are operated to be close.

The vertical position of the first regenerator B relative to the gas scrubber A is determined based on the pressure required as a gasifying agent. The higher the pressure required as a gasifying agent is, the lower the position of the first regenerator B relative to the gas scrubber A is. The scrubbing liquid which has flowed into the first regenerator B is fed to the second regenerator C, and if the second regenerator C is disposed at a location lower than the gas scrubber A, the scrubbing liquid is allowed to flow into the second regenerator C in a gravity flow without providing a circulating pump at the outlet of the first regenerator B in a scrubbing liquid circulating path. However, if the pressure Pb becomes a predetermined pressure or lower, there is a possibility that the scrubbing liquid flows backward, and hence such care as to provide a check valve in the scrubbing liquid circulating path should be taken as necessary. A pump for circulating a scrubbing liquid may be provided. Further, by providing a bypass line having a scrubbing liquid bypass valve 19ac to suppress the amount of the scrubbing liquid which flows in the first regenerator B, the control of Pb can be easily made, or consumption of steam for heating can be reduced. If the first regenerator is a complete mixing-type regenerator as with the embodiments shown in FIGS. 9 and 10, the releasing of carbon dioxide in the first regenerator can be suppressed.

By employing a two-stage regeneration-type acid gas removing apparatus shown in FIGS. 9, 10 and 13, the fuel cell power generation system by gasification shown in FIG. 8 may have high efficiency.

It can be said that the embodiment shown in FIG. 8 relates to a system as if the system has two series of the carbon dioxide absorption apparatuses. In such application, the regenerating gas of the second regenerator is preferably such gas as to lower partial pressure of carbon dioxide in the vent gas 36c as much as possible, and such gas has as low temperature as possible, and carbon dioxide content in the gas is low and the amount of the gas is large.

In optimum conditions in the embodiment which have been found by the present inventors, when the operating pressure in the gasification step is atmospheric pressure, the temperature of the gas flowing into the gas scrubber A is 500°C, and calorific value of materials is about 13 MJ/kg, the operating condition having the highest efficiency is as follows:

The gas-phase section pressure Pa in the gas scrubber A: 95 to 99 kPa, the temperature $T_{LAE}$ of the scrubbing liquid: 70 to 80°C (in some cases, 80°C to 95°C)

The gas-phase section pressure Pb in the first regenerator B: 70 to 140 kPa, the temperature $T_{LBE}$ of the scrubbing liquid: 70 to 99°C

The gas-phase section pressure Pc in the second regenerator C: 90 to 110 kPa, the temperature $T_{LCE}$ of the scrubbing liquid: 60 to 80°C

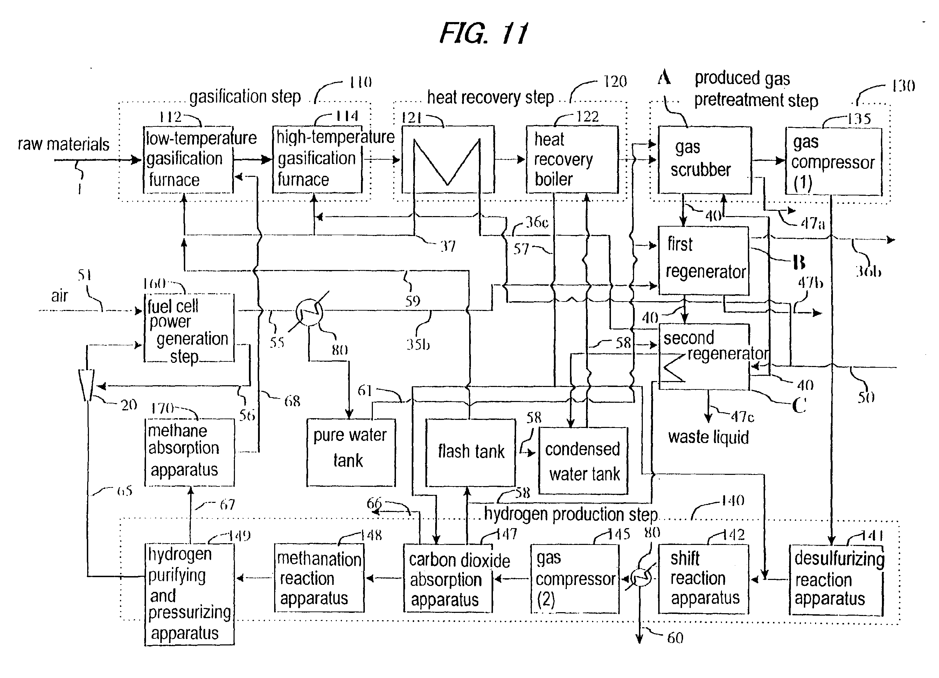

FIG. 11 shows a second embodiment of a fuel cell power generation system by gasification which uses a two-stage regeneration-type acid gas removing apparatus of the present invention as with FIG. 8. An embodiment shown in FIG. 11 will be described below on condition that portion for which description is not made is the same as the embodiment shown in FIG. 8. The present embodiment is such an embodiment that as a gasifying agent supplied to a gasification step, the concentration of carbon dioxide is low, and steam is as rich as possible. An oxygen electrode vent gas in the fuel cell is used as a regenerating gas of the first regenerator B, and an oxidizing agent for a gasification step is used as a regenerating gas of the second regenerator C, unlike the embodiment shown in FIG. 8. The oxygen electrode vent gas in the fuel cell has a temperature of about 75 to 90°C and contains saturated steam, and even if such vent gas is used as a regenerating gas of the first regenerator, such vent gas does not deprive the scrubbing liquid of latent heat of vaporization. Therefore, a cooling capability for cooling the scrubbing liquid is small, but such vent gas does not contain carbon dioxide, and hence the vent gas has a high capacity as a carbon dioxide desorption gas.

Therefbre, the oxygen electrode vent gas in the fuel cell is used as a regenerating gas of the first regenerator, and a first regenerator vent gas is discharged to the outside of the system and the scrubbing liquid after carbon dioxide desorption is supplied to the second regenerator.

Therefore, the second regenerator vent gas obtained by supplying pure oxygen or highly enriched oxygen to the second regenerator as a regenerating gas, i.e. a mixing gas of a gasifying agent and an oxidizing agent for supplying the gasification step contains carbon dioxide whose concentration is much lower than that in the embodiment shown in FIG. 8. Further, because temperature drop of the scrubbing water (scrubbing liquid) in the first regenerator is extremely small, a steam generating capability in the second regenerator is not lowered, and hence this is advantageous in the case where it is not preferable to supply carbon dioxide too much as a gasifying agent in the gasification step. If the amount of generated steam is insufficient, the scrubbing liquid in the second regenerator may be heated by steam or the like.

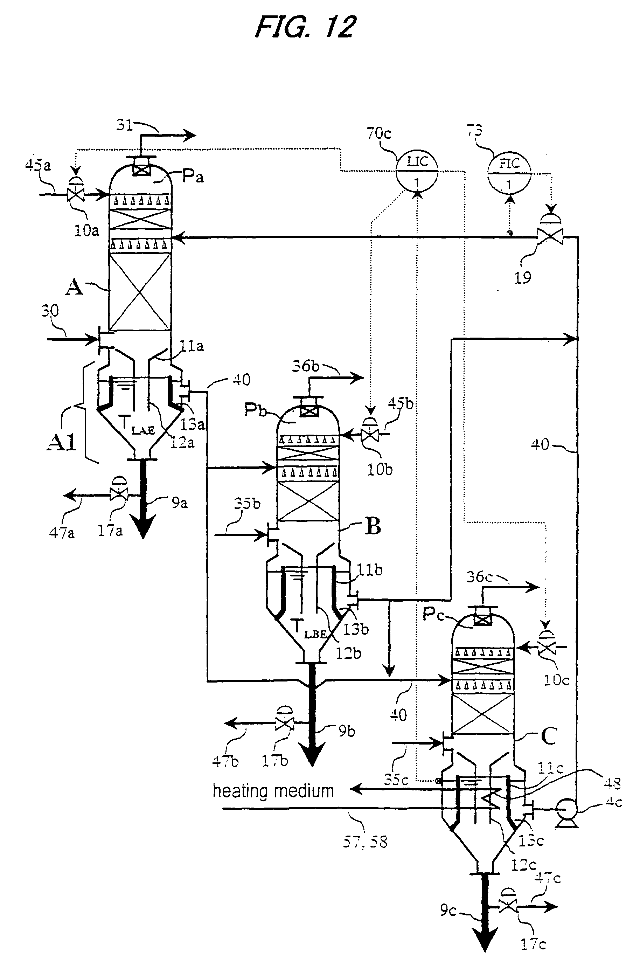

In the embodiment of the present invention, the first regenerator and the second regenerator may be a countercurrent flow-type regenerator shown in FIGS. 3 and 4. However, if the scrubbing liquid is heated by steam or the like in the second regenerator, as shown in FIG. 12, a line 40b for allowing the scrubbing liquid to flow from the first regenerator B into the gas scrubber A by bypassing the second regenerator C may be provided to adjust the amount of the scrubbing liquid flowing in the second regenerator, thereby raising the temperature of the scrubbing liquid in the second regenerator by as small heating calorific value as possible. A heat transfer tube 48 for heating the scrubbing liquid in the second regenerator is disposed in the retained scrubbing liquid at as high position as possible. The heat transfer tube 48 for heating the scrubbing liquid is disposed at the position higher than the lower end portion of the scrubbing liquid down flow pipe 12c. With this arrangement, convection of retained scrubbing water (scrubbing liquid) can be suppressed, and hence precipitation of solid components is not disrupted.

In optimum conditions in the embodiment which have been found by the present inventors, when the operating pressure in the gasification step is atmospheric pressure, the temperature of the gas flowing into the gas scrubber A is 500°C, and calorific value of materials is about 13 MJ/kg, the operating condition having the highest efficiency is as follows:

The gas-phase section pressure Pa in the gas scrubber A: 95 to 99 kPa, the temperature $T_{LAE}$ of the scrubbing liquid: 70 to 80°C (in some cases, 80°C to 95°C)

The gas-phase section pressure Pb in the first regenerator B: 90 to 110 kPa, the temperature $T_{LBE}$ of the scrubbing liquid: 60 to 80°C

The gas-phase section pressure Pc in the second regenerator C: 70 to 140 kPa, the temperature $T_{LCE}$ of the scrubbing liquid: 70 to 99°C

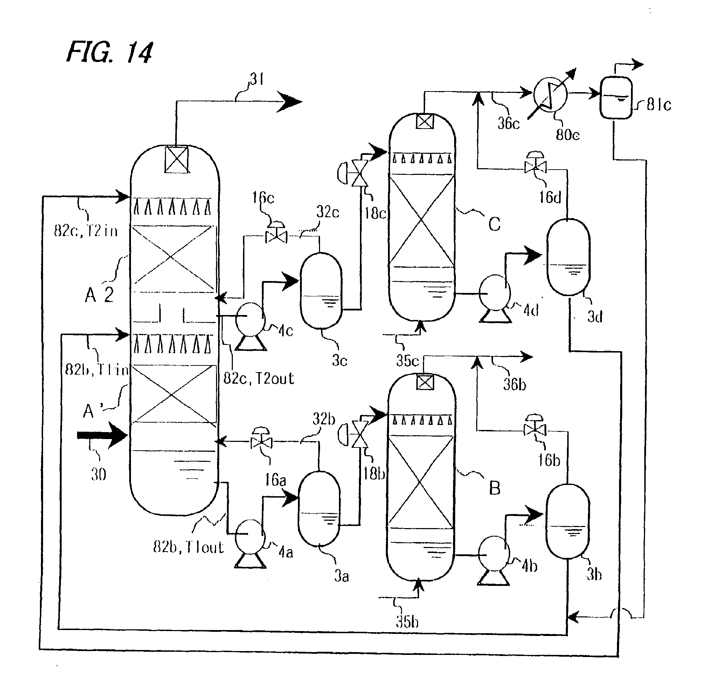

FIG. 14 shows a third embodiment of the present invention in which a gas scrubber comprises a two-stage scrubber comprising a first gas scrubbing section A' and a second gas scrubbing section A2, and a scrubbing liquid regenerator comprises a two-stage regenerator comprising a first regenerator B and a second regenerator C, whereby an alkaline regeneration function of the scrubbing liquid and an acid gas removing function of the gas to be scrubbed are further enhanced. A gas 30, to be scrubbed, supplied to the first gas scrubbing section A' is brought into contact with a first scrubbing liquid 82b in a countercurrent flow, and the gas 30 to be scrubbed is cooled by the first scrubbing liquid 82b and strong acid gases such as hydrogen chloride are absorbed in the first scrubbing liquid 82b, and dust components in the gas are entrapped in the first scrubbing liquid 82b. Next, the gas to be scrubbed which has been led from the first gas scrubbing section A' to the second gas scrubbing section A2 is brought into contact with the second scrubbing liquid 82c in a countercurrent flow, and further cooled by the second scrubbing liquid 82c to condense super saturated steam, and weak acid gases such as carbon dioxide and hydrogen sulfide in the gas are absorbed by the second scrubbing liquid 82c. Thus, the scrubbed gas 31 obtained from the second gas scrubbing section A2 becomes a clean gas composed mainly of carbon monoxide and hydrogen having a small solubility in alkaline solution, saturated steam, and carbon dioxide which has not been dissolved in alkaline solution.

On the other hand, the first scrubbing liquid 82b which has absorbed strong acid gases such as hydrogen chloride and whose temperature has increased is sent to the first regenerator B via the gas-liquid separator 3a, and is brought into contact with the first regenerating gas 35b, for example, enriched oxygen gas having different components from the gas to be scrubbed and containing oxygen to generate steam in the first regenerator B until a pressure in the first regenerator B reaches saturated aqueous vapor pressure at a temperature in the first regenerator B.

For example, when the regenerator is operated at an atmospheric pressure (about 0.1 PMa (1 bar)) and a temperature of 80°C, a first regenerator vent gas 36b discharged from the first regenerator accompanies 47% of steam. At the same time, the first scrubbing liquid 82b is deprived of latent heat of vaporization and is cooled. It should be noted that when the first regenerating gas 35b accompanies steam whose amount is equal to or greater than the amount corresponding to saturated aqueous vapor pressure in the first regenerator B, water will not vaporize and the first scrubbing liquid will not be cooled in the first regenerator B. Therefore, it is more preferable that steam content in the first regenerating gas 35b is smaller, i.e. dew point is lower.

Further, because the first scrubbing liquid 82b absorbs strong acid gases in the first gas scrubbing section A', a pH of the first scrubbing liquid 82b is lowered, and because water content of the first scrubbing liquid 82b is vaporized in the first scrubbing liquid regenerator B, it is necessary to replenish first alkaline agent and water. Further, in the case where dust is contained in the gas to be scrubbed and is entrapped in the first scrubbing liquid 82b, it is necessary to separate dust from the first scrubbing liquid 82b. In the present invention, a chemical adding apparatus and a filtration apparatus are provided in a circulating passage of 'the first scrubbing liquid, respectively, whereby the pH of the first scrubbing liquid 82b is adjusted by adding first alkaline agent and a diluting water for diluting alkaline agent to the first scrubbing liquid 82b, and the whole or part of the first scrubbing liquid 82b is always filtrated to remove solid components. Any alkaline substance may be used as alkaline agent, but sodium hydroxide or potassium hydroxide is preferable. If the pH of the first scrubbing liquid 82b to be adjusted, i.e. the pH of the first scrubbing liquid 82b at the inlet of the first gas scrubbing section A' is 4 or more, then the first scrubbing liquid 82b has an absorption capability for absorbing hydrogen chloride gas and is preferable. However, if the pH of the first scrubbing liquid 82b is 11 or more, the first scrubbing liquid 82b absorbs carbon dioxide besides strong acid gases and is not preferable because of an increased consumption of the first alkaline agent. Therefore, the pH of the first scrubbing liquid 82b at the inlet of the first gas scrubbing section A' is preferably in the range of 4 to 11, more preferably 5 to 10. Salts produced by neutralization reaction of the first alkaline agent and strong acid gases are gradually accumulated in the first scrubbing liquid 82b, and a part of the first scrubbing liquid is required to be discharged at all times in order to prevent harmful effect caused by excessive condensation of salts.

On the other hand, the first regenerator vent gas 36b which accompanies saturated steam can be used as a diluting gas of a gasifying agent for gasifying combustibles. Further, when enriched oxygen gas or PSA oxygen (enriched oxygen produced by a pressure swing adsorption method) is used as the first regenerating gas 35b, the first regenerating vent gas 36b may be utilized as a gasifying agent as it is.

With regard to temperature of the first scrubbing liquid 82b, the temperature Tlout of the first scrubbing liquid at the outlet of the first gas scrubbing section should be in the range of the boiling point to the boiling point minus 20°C, preferably in the range of the boiling point to the boiling point minus 10°C, and more preferably in the range of the boiling point to the boiling point minus 5°C. Further, the temperature Tlin of the first scrubbing liquid at the inlet of the first gas scrubbing section A' should be in the range of the temperature Tlout of the first scrubbing liquid to the temperature Tlout minus 20°C, preferably in the range of the saturation temperature of steam in the gas to be scrubbed to the saturation temperature minus 5°C.

The amount of the first scrubbing liquid 82b to be circulated should be determined on the basis of flow rate, temperature and specific heat of the gas to be scrubbed so that the temperature of the first scrubbing liquid meets the temperatures required in the first scrubbing liquid at the outlet and inlet of the first gas scrubbing section A'.

The first scrubbing liquid 82b withdrawn from the first regenerator B is returned to the first gas scrubbing section A' via the gas-liquid separator 3b.

Further, the second scrubbing liquid 82c which has absorbed carbon dioxide and weak acid gases such as hydrogen sulfide and whose temperature has increased by condensation of steam is sent to the second regenerator C via the gas-liquid separator 3c, and is brought into contact with the second regenerating gas 35c, for example, air or a fuel cell vent gas having different components from the gas to be scrubbed to generate steam in the second regenerator C until a pressure in the second regenerator C reaches the saturated aqueous vapor pressure at a temperature in the second regenerator C, and to perform regeneration of alkali by decarbonation.

In the present invention, a chemical adding apparatus and a filtration apparatus may be provided in a circulating passage of the second scrubbing liquid 82c to add a proper amount of an oxidizing agent to the second scrubbing liquid 82c according to the amount of absorbed reducing acid gas such as hydrogen sulfide. Further, the pH of the second scrubbing liquid 82c is preferably in the range of 7 to 12. The second alkaline agent and the oxidizing agent are the same as alkaline agent and the oxidizing agent described in the first embodiment.

On the other hand, the second regenerator vent gas 36c which accompanies desorbed carbon dioxide and saturated steam is discharged through a condenser 80c and a condensed water separator 81c. The condensed water recovered in the condensed water separator 81c is returned to the system as a diluting water of the first alkaline agent or a diluting water of the first scrubbing liquid 82b.

With regard to a temperature of the second scrubbing liquid 82c, the temperature T2out of the second scrubbing liquid at the outlet of the second gas scrubbing section A2 should be in the range of the temperature Tlin of the first scrubbing liquid at the inlet of the first gas scrubbing section A' to the temperature Tlin minus 20°C, and preferably in the range of the temperature Tlin of the first scrubbing liquid at the inlet of the first gas scrubbing section A' to the temperature Tlin minus 10°C. Further, the temperature T2in of the second scrubbing liquid at the inlet of the second gas scrubbing section A2 should be lower than the temperature T2out of the second scrubbing liquid at the outlet of the second gas scrubbing section A2 by 5°C or more, preferably 10°C or more, and more preferably 20°C or more.

The amount of the second scrubbing liquid 82c to be circulated should be determined on the basis of flow rate, temperature and specific heat of the gas to be scrubbed so that the temperature of the second scrubbing liquid meets the temperatures required in the second scrubbing liquid at the outlet and inlet of the second gas scrubbing section A2.

The second scrubbing liquid 82c withdrawn from the second regenerator C is returned to the second gas scrubbing section A2 via the gas-liquid separator 3d. In the case where the temperature of the second scrubbing liquid at the outlet of the second regenerator C is higher than the temperature of the second scrubbing liquid at the inlet of the second gas scrubbing section, a cooling apparatus is provided in a circulating passage to adjust the temperature of the second scrubbing liquid.

In the present embodiment, as described above, by setting the temperature of the scrubbing liquid at respective locations, among calorific value possessed by the gas 30 to be scrubbed, sensible heat is cooled and recovered in the first gas scrubbing section A', and the recovered heat is utilized to generate steam in the first regenerator B. On the other hand, latent heat, i.e. the condensed heat of steam contained in the gas 30 to be scrubbed is cooled and recovered in the second gas scrubbing section A2, and the recovered heat is utilized for decarbonation of the second scrubbing liquid 82c, i.e. regeneration of the second alkaline agent in the second regenerator C. In this manner, according to the present invention, thermal efficiency in the total system and absorption efficiency of the gas to be removed can be improved.

The scrubbed gas 31 obtained in the present embodiment is treated to produce hydrogen gas by one of or an optional combination of a desulfurizing step, a carbon monoxide shift reaction step, a carbon monoxide selective oxidation step, a carbon dioxide absorption step, a methanation step, a hydrogen purifying step using hydrogen-absorbing alloy, and a hydrogen purifying PSA step, and the produced hydrogen gas is supplied to a fuel cell power generation step to generate electricity.

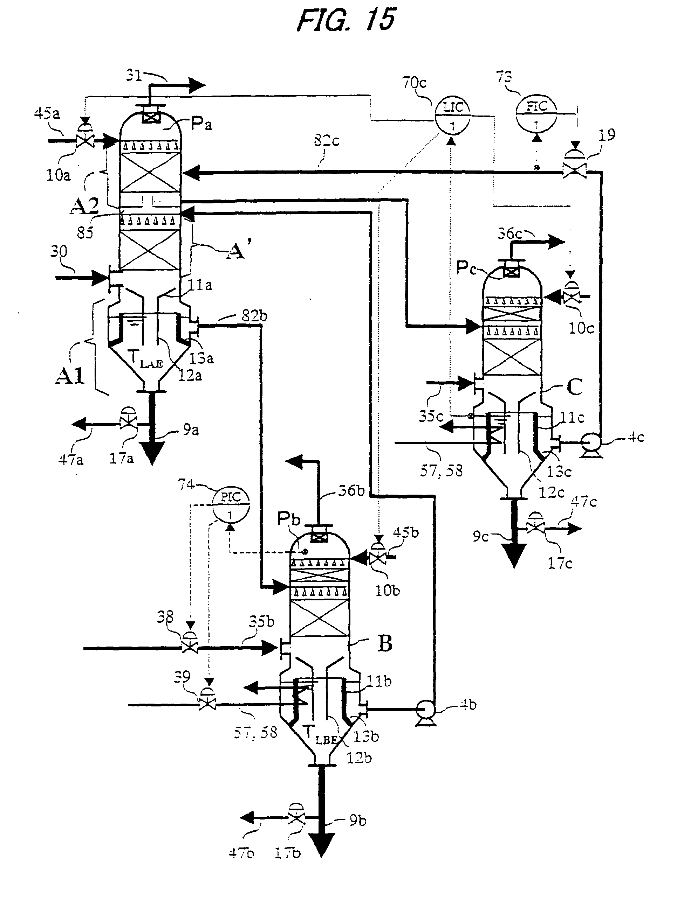

FIG. 15 shows another embodiment of the third aspect of the present invention shown in FIG. 14. The interior of the gas scrubber A is partitioned by a liquid-collecting plate 85 to define a first gas scrubbing section A' at the lower side of the liquid-collecting plate and a second gas scrubbing section A2 at an upper side of the liquid-collecting plate. The liquid-collecting plate 85 has such a structure that the gas to be scrubbed can flow from the first gas scrubbing section A' to the second gas scrubbing section A2 but can prevent the scrubbing liquid from flowing downwardly from the second gas scrubbing section A2 to the first gas scrubbing section A'. Therefore, the first scrubbing liquid 82b which flows between the first gas scrubbing section A' and the first regenerator B, and the second scrubbing liquid 82c which flows between the second gas scrubbing section A2 and the second regenerator C are circulated independently of each other. Other structures are the same as FIG. 13.

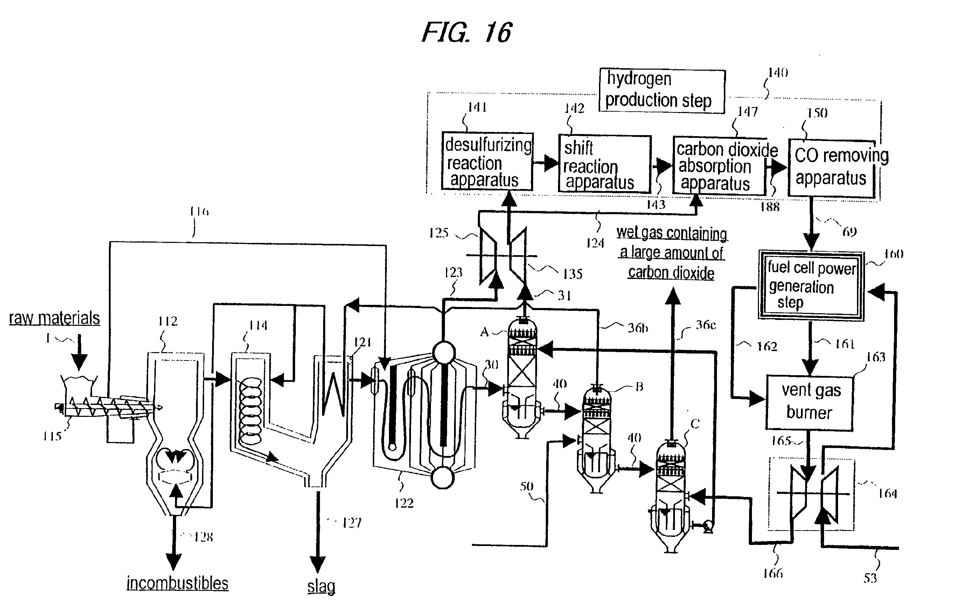

FIG. 16 is a schematic view showing an embodiment of a power generation system by gasification of combustibles which incorporates an acid gas removing apparatus of the present invention in which combustibles, i.e. combustible wastes (municipal wastes, refuse-derived fuel, solid-water mixture, used paper, plastic wastes, waste FRP, biomass wastes, automobile wastes, industrial wastes such as waste wood, low-grade coal, and waste oil and the like) or coal or the like is gasified, and the produced gas is processed and the processed gas is supplied to a fuel cell. Materials 1 which are combustibles are supplied from a raw material feeder 115 to a low-temperature gasification furnace 112 in which the materials 1 are pyrolyzed and gasified at a temperature of 400 to 1000°C, and the produced gas is supplied to a high-temperature gasification furnace 114. Incombustibles in the materials are discharged separately from the low-temperature gasification furnace 112. The produced gas is further gasified at a temperature of 1000 to 1500°C in the high-temperature gasification furnace 114 to reduce the molecular weight of the produced gas. The temperature of the high-temperature gasification furnace 114 is maintained at not lower than the temperature in which ash content contained in the produced gas is melted, and 80 to 90% of ash content in the produced gas is slagged and discharged to the outside of the system as molten slag 127. Organic matter and hydrocarbon in the produced gas are completely decomposed into hydrogen, carbon monoxide, carbon, steam, and carbon dioxide in the high-temperature gasification furnace. The produced gas obtained in the high-temperature gasification furnace 114 passes through a high-temperature heat exchanger 121 and a waste heat boiler (heat recovery boiler) 122 in which sensible heat is recovered and the temperature of the produced gas is lowered to 200°C, preferably 350°C, and more preferably 500°C. The recovered sensible heat is used for generation of steam, heating of a gasifying agent, or the like.

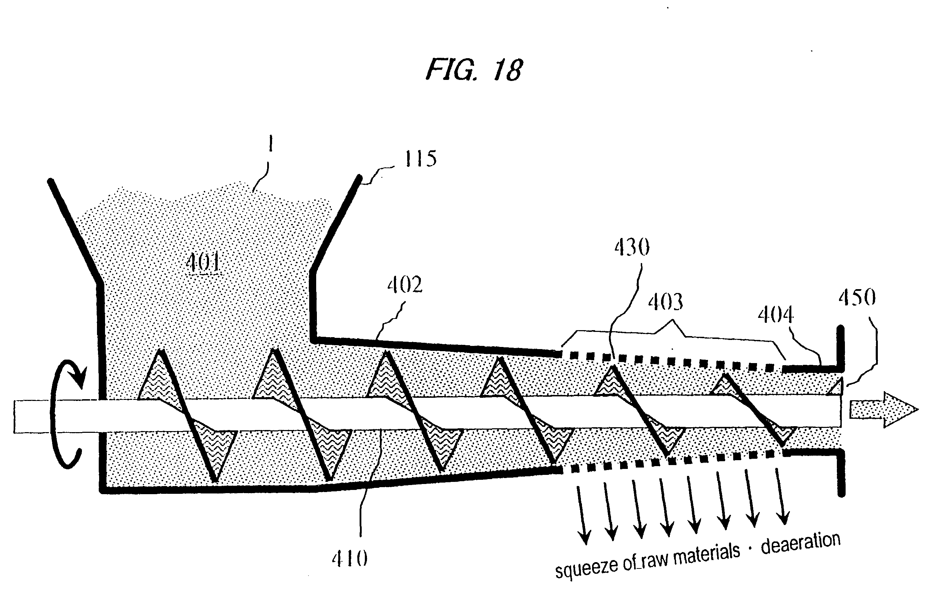

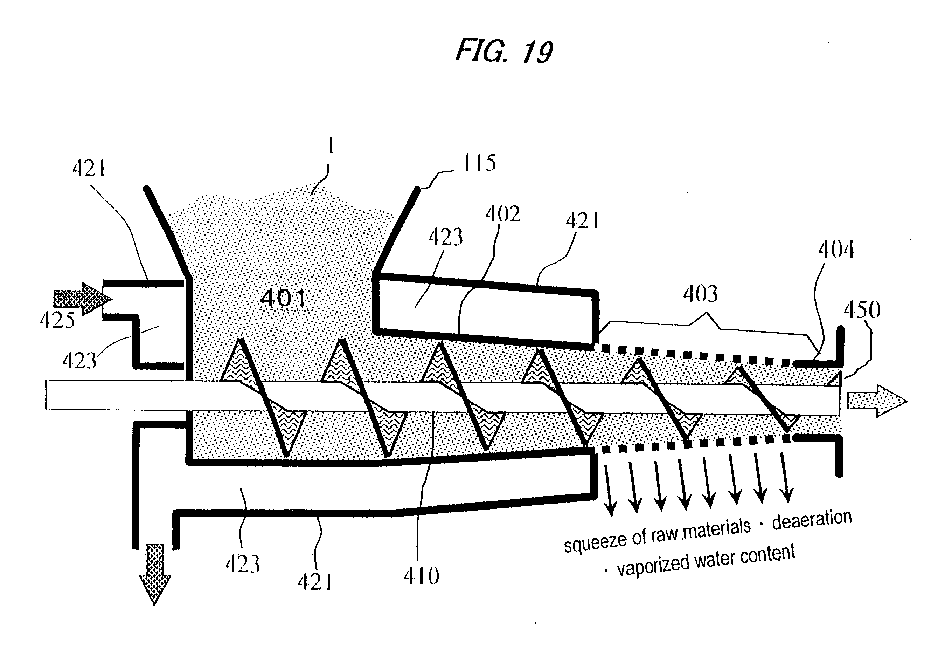

In the case where combustible materials having an irregular shape such as municipal wastes are materials, a raw material feeder shown in FIG. 18 or FIG. 19 described in detail later should be employed to prevent air from leaking through the raw material feeder. It this case, water squeezed from raw materials in the raw material feeder is supplied to a waste heat boiler 122, and mixed with a high-temperature produced gas to be vaporized and decomposed. On the other hand, degased gas generated in the feeder may be supplied to the waste heat boiler 122 to be decomposed as with the squeezed water, or be supplied to a high-temperature gasification furnace as an oxidizing agent and a gasifying agent (not shown), alternatively, or be introduced into a vent gas burner 163 and treated.

The produced gas, i.e. the gas 30, to be scrubbed, from which sensible heat has been recovered in the waste heat boiler is led to the gas scrubber A of the present invention, and acid gases are removed and the produced gas is cooled to a temperature of 60 to 90°C. If the amount of dust or components contained in the produced gas have a bad influence on the performance of the gas scrubber, then a dry-type dust collector such as a cyclone or a filter may be provided upstream of the gas scrubber, whereby the produced gas is led to the gas scrubber A after removing dust therefrom.

In the present embodiment, regeneration of alkaline agent is performed in two stages. In the first regenerator B, highly enriched oxygen gas whose oxygen concentration is 80% or higher, preferably 90% or higher, and more preferably 93% or higher, or pure oxygen gas is used as a regenerating gas 50. The regenerator vent gas 36b discharged from the first regenerator B is heated in the high-temperature heat exchanger 121, and then supplied to the gasification furnace as a gasifying agent and an oxidizing agent for partial oxidization. Because the regenerating gas supplied to the first regenerator B, which is highly enriched oxygen gas or pure oxygen, does not contain steam, the regenerating gas becomes to contain a large amount of steam by contacting alkaline agent, and the temperature rise of the regenerating gas is suppressed by latent heat of vaporization, so the amount of carbon dioxide stripped by the regenerating gas is held to be low. Thus, such regenerating gas is suitable for a gas to be supplied to the gasification step. Further, a hydrogen electrode vent gas 161 in the fuel cell and an oxygen electrode vent gas 162 in the fuel cell power generation step 160 are combusted by a vent gas burner 163, and pressure energy and thermal energy are recovered in a turbo-charger 164 and combustion exhaust gas 166 is supplied to the second regenerator C where a wet gas 36c containing a large amount of carbon dioxide is obtained. The gas scrubber A, the first regenerator B and the second regenerator C are not limited to the embodiment shown in FIG. 16, and they may be the embodiments shown in FIGS. 9 and 10 or FIGS. 12 and 13.

The scrubbed gas 31 which has been scrubbed and cooled is pressurized to a pressure of 200 to 800 kPa in a gas compressor 135, and then supplied to a hydrogen production step 140. The gas compressor 135 is driven by a steam turbine 125 which uses high-pressure steam 123 from the waste heat boiler 122. Low-pressure steam 124 discharged from the steam turbine 125 is supplied to a carbon dioxide absorption apparatus 147 or a shift reaction apparatus 142 in the hydrogen production step to utilize thermal energy effectively.

The hydrogen production step 140 incorporates a desulfurizing reaction apparatus 141 for removing sulfur content in the produced gas; a shift reaction apparatus 142 for converting carbon monoxide and $H_2O$ in the produced gas into hydrogen and carbon dioxide by a shift reaction; a carbon dioxide absorption apparatus 147 for absorbing and removing carbon dioxide in the produced gas after the shift reaction; and a CO removing apparatus 150 for removing carbon monoxide remaining in the gas 188 after carbon dioxide absorption, and the produced gas is sequentially processed in the respective apparatuses to obtain highly enriched hydrogen gas 69. In the CO removing apparatus 150, a selective oxidation apparatus for combusting carbon monoxide in the gas selectively, or a methanation reaction apparatus for producing methane by reacting carbon monoxide and carbon dioxide in the gas with hydrogen, or a hydrogen purifying PSA (pressure swing adsorption apparatus) for adsorbing and separating gas components, other than hydrogen, such as carbon monoxide, carbon dioxide, and nitrogen by adsorbent such activated carbon or zeolite is used.

In the fuel cell power generation step 160, the highly enriched hydrogen gas 69 is supplied to a hydrogen electrode of a fuel cell and air 53 is pressurized by the turbo-charger 164 and supplied to an oxygen electrode of the fuel cell, thus generating electricity. The fuel cell may be any fuel cell as far as such fuel cell can use hydrogen as a fuel, and any type of a proton exchange membrane fuel cell, a phosphoric acid fuel cell, a molten carbonate fuel cell and a solid electrolyte fuel cell may be used.

The hydrogen electrode vent gas 161 and the oxygen electrode vent gas 162 are led to the vent gas burner 163 and combusted. Combustion exhaust gas 165 of the vent gas burner 163 is supplied to a turbo-charger 164, and air 53 to be supplied to the oxygen electrode of the fuel cell is pressurized by the turbo-charger 164. Thereafter, the combustion exhaust gas 165 is used as a regenerating gas of the second regenerator C and becomes a wet gas 36c containing a large amount of carbon dioxide.

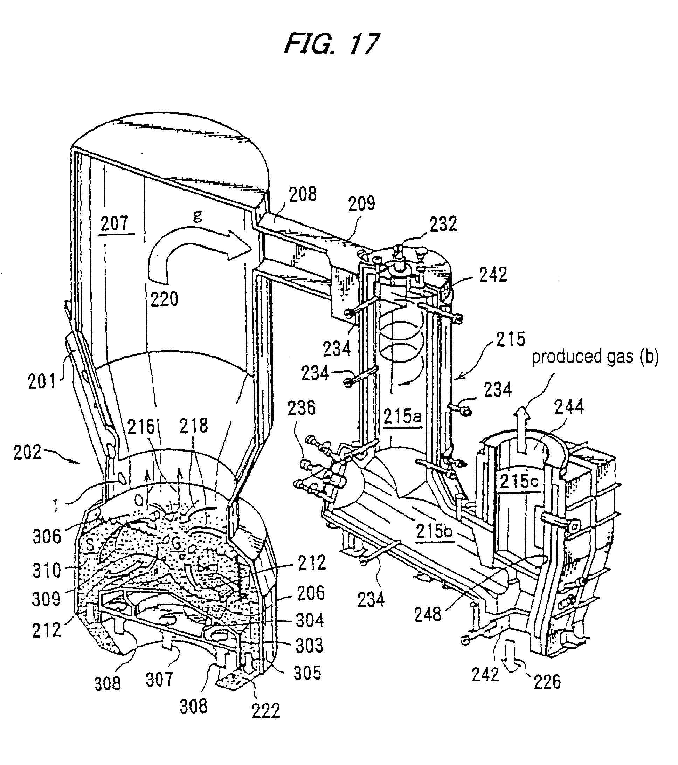

FIG. 17 shows typical configuration of main constituent apparatuses in the gasification step in the embodiment shown in FIG. 16. The low-temperature gasification furnace 202 is a cylindrical fluidized-bed furnace having an internally circulating flow of a fluidized medium therein, and has an enhanced ability of materials to be diffused within the furnace for thereby realizing stable gasification. An oxygen-free gas is supplied into the central part of the interior of the furnace wherein a fluidized medium moves downward, while an oxygen-containing gas is supplied into the peripheral part of the furnace. This permits char produced within the low-temperature gasification furnace to be selectively combusted, contributing to an improvement in conversion rate of carbon and cold gas efficiency. The high-temperature gasification furnace 215 is a swirling-type slagging combustion furnace.

A conical distributor plate 206 is disposed at the bottom of the cylindrical fluidized-bed furnace. A fluidizing gas supplied through the distributor plate 206 comprises a central fluidizing gas 307 which is supplied from a central portion 304 of the bottom to the interior of the furnace as an upward flow, and a peripheral fluidizing gas 308 which is supplied from a peripheral portion 303 of the bottom to the interior of the furnace as an upward flow.

The central fluidizing gas 307 comprises an oxygen-free gas, and the peripheral fluidizing gas 308 comprises an oxygen-containing gas. The total amount of oxygen in all of the fluidizing gas is set to be 10% or higher and 30% or lower of the theoretical amount of oxygen required for combustion of combustibles. Thus, the interior of the furnace is kept in a reducing atmosphere.

The mass velocity of the central fluidizing gas 307 is set to be smaller than that of the peripheral fluidizing gas 308. The upward flow of the fluidizing gas in an upper peripheral region of the furnace is deflected toward a central region of the furnace by a deflector 306. Thus, a moving bed 309 in which the fluidized medium (silica sand is used) are moved downward and diffused on the distributor plate is formed in the central region of the furnace. In the peripheral region of the furnace, a fluidized bed 310 in which the fluidized medium is actively fluidized is formed. As indicated by the arrows 218, the fluidized medium ascends in the fluidized bed 310 in the peripheral region of the furnace, is deflected by the deflector 306 to an upper portion of the moving bed 309, and descends in the moving bed 309. Then, as indicated by the arrows 212, the fluidized medium moves along the fluidizing gas distributor plate 206 and moves into a lower portion of the fluidized bed 310. In this manner, the fluidized medium circulates in the fluidized bed 310 and the moving bed 309 as indicated by the arrows 218, 212.

While the combustibles 1 supplied to the upper portion of the moving bed 309 by a raw material feeder 201 descend together with the fluidized medium in the moving bed 309, the combustibles are volatilized with heating by the fluidized medium. Because there is no or little oxygen available in the moving bed 309, the pyrolysis gas (produced gas) produced by the gasification, which comprises volatile matter, is not combusted and passes through the moving bed 309 as indicated by the arrows 216. Consequently, the moving bed 309 forms a gasification zone G. The produced gas moves into a freeboard 207 as indicated by the arrow 220, and is discharged from a gas outlet 208 as a produced gas g.

Char (fixed carbon) and tar produced in the moving bed 309 which are not gasified move together with the fluidized medium from the lower portion of the moving bed 309 to the lower portion of the fluidized bed 310 in the peripheral region of the furnace as indicated by the arrows 212, and are partially oxidized by the peripheral fluidizing gas 308 having a relatively large oxygen concentration. Consequently, the fluidized bed 310 forms an oxidization zone S of the combustibles. In the fluidized bed 310, the fluidized medium is heated by the heat of combustion in the fluidized bed. The fluidized medium heated to a high temperature is turned over by the deflector 306 as indicated by the arrows 218, and transferred to the moving bed 309 where it serves as a heat source for gasification. In this manner, the fluidized bed is kept at a temperature ranging from 400 to 1000°C, preferably from 400 to 600°C, thus continuing controlled combustion reaction. A ring-shaped incombustible discharge port 305 is formed at the peripheral portion of the bottom of the fluidized-bed gasification furnace for discharging the incombustibles.

According to the fluidized-bed gasification furnace shown in FIG. 17, the gasification zone G and the oxidization zone S are formed in the fluidized bed, and the fluidized medium circulates in both zones. Because the fluidized medium serves as a heat transfer medium, good quality combustible gas having a high heating value is generated in the gasification zone G, and char and tar which are difficult to be gasified is combusted efficiently in the oxidization zone S. Consequently, gasification efficiency of combustibles such as wastes can be improved and the produced gas having a good quality can be generated. The low-temperature gasification furnace is not limited to the cylindrical fluidized-bed furnace, and, as with the above embodiments, a kiln-type or stoker-type furnace may be adopted.

Next, the swirling-type slagging combustion furnace will be described in more detail. The high-temperature gasification furnace 215 includes a cylindrical primary gasification chamber 215a having a substantially vertical axis, a secondary gasification chamber 215b which is slightly inclined to the horizontal direction, and a tertiary gasification chamber 215c disposed downstream of the secondary gasification chamber 215b and having a substantially vertical axis. A slag discharge port 242 is provided between the secondary gasification chamber 215b and the tertiary gasification chamber 215c. Up to the slag discharge port 242, most of ash content is slagged and discharged through the slag discharge port 242. The produced gas is supplied into the swirling-type slagging combustion furnace in the tangential direction so that a swirling flow of the gas is created within the primary gasification chamber 215a. The produced gas supplied into the swirling-type slagging combustion furnace forms a swirling flow, and solid matter contained in the gas is trapped on the circumferential inner wall surface under a centrifugal force. Therefore, advantageously, the percentage of slagging and the percentage of slag collection are high, and slag mist is less likely to be scattered.

Oxygen is supplied into the swirling-type slagging combustion furnace through a plurality of nozzles 234 so as to properly maintain the temperature distribution in the furnace. The temperature distribution is regulated so that the decomposition of hydrocarbons and the slagging of ash are completed in the primary gasification chamber 215a and the secondary gasification chamber 215b. When oxygen is solely supplied, for example, there is a fear of a nozzle being burned. Therefore, oxygen is diluted with steam or the like before supplying, as necessary. Further, steam contributes to steam reforming to reduce the molecular weight of hydrocarbons, and thus should be supplied in a satisfactory amount. This is because the interior of the furnace has a high temperature, and when the amount of the steam is insufficient, condensation polymerization takes place to produce graphite having very low reactivity which is causative of unburned fuel loss.

The slag flows down on the lower surface of the secondary gasification chamber 215b, and is discharged as molten slag 226 through the slag discharge port 242. The tertiary gasification chamber 215c serves as a buffer zone which prevents the slag discharge port 242 from being cooled by radiational cooling from a waste heat boiler provided downstream of the tertiary gasification chamber 215c, and serves to reduce the molecular weight of the undecomposed gas. An exhaust port 244 for discharging produced gas is provided at the upper end of the tertiary gasification chamber 215c, and a radiation plate 248 is provided on the lower part of the tertiary gasification chamber 215c. The radiation plate 248 serves to reduce the quantity of heat emitted through the exhaust port 244 by radiation. Reference numeral 232 denotes a start-up burner, and reference numeral 236 denotes a stabilizing burner. Organic matter and hydrocarbons contained in the produced gas are completely decomposed in the high-temperature gasification furnace into hydrogen, carbon monoxide, steam, and carbon dioxide. The gas produced in the high-temperature gasification furnace 215 is discharged from the exhaust gas port 244, and then is cooled to 650°C or below in the waste heat boiler (not shown) comprising a radiation boiler to solidify molten alkali metal salts. The alkali metal salts after the solidification are then collected by the dust collector (not shown). The high-temperature gasification furnace is not limited to this swirling-type slagging combustion furnace, and may be of other gasification furnace type.

FIG. 18 is a view showing the structure of the raw material feeder shown in FIG. 16. The raw material feeder will be described in more detail. An outer casing in the raw material feeder 115 comprises a hopper section 401 for raw materials, a casing 402 which is tapered so that the diameter is gradually reduced toward the front end thereof, a tapered perforated casing 403 having a plurality of openings 430 and provided downstream of the tapered casing 402, and a front casing 404 including an outlet 450. A screw shaft 410 whose diameter is gradually reduced toward the front end so as to correspond to the tapered casing is provided in the casing. Combustibles 1 as raw materials are supplied to the hopper section 401 for a raw material, and conveyed to the front end of the screw shaft by the rotation of the screw shaft 410. At the same time, the combustibles are compressed by the configuration of the taper in the screw shaft 410 and the casing 402. Water content is squeezed from the compressed combustibles and gases mixed in the materials are deaerated, and water content and gases are discharged to the outside of the raw material feeder through the plurality of openings 430 provided in the casing 403. The size of the openings is small enough to avoid the discharge of the combustibles through the openings, and the maximum diameter of the openings is about 10 mm. The combustibles having a reduced water content as a result of the compression are supplied through the outlet 450 to the low-temperature gasification furnace 112.

In the raw material feeder 115, the combustibles are in a compressed state within the casings 401, 402 and 403 to thus increase the internal pressure of the feeder 115, and hence air or the like does not enter the raw material feeder 115 from the outside. Further, the squeezing reduces the water content of the combustibles, and thus reduce heat loss caused by the latent heat of vaporization within the low-temperature gasification furnace. The oxygen ratio is lowered by the reduction in heat loss to enhance the cold gas efficiency. The compressed combustibles have relatively uniform density which can reduce a fluctuation in the amount of the supplied materials. Thus, the raw material feeder shown in FIG. 18 is very favorable as a raw material feeder in the case where combustibles having irregular shapes such as municipal wastes are used as the raw materials.

By providing another casing (not shown) around the casing 402 so as to have a gap between the casing 402 and this another casing, heating fluid is allowed to flow through the gap to heat the materials 1, thereby performing the squeeze of raw materials effectively. At this time, as a heating fluid, a part of steam from the waste heat boiler 122 or combustion gas from the vent gas burner 163 in FIG. 16 may be used.

Further, as shown in FIG. 19, by providing a heating cover casing 421 around the casing 402 so as to have a gap 423 between the casing 402 and the heating cover casing 421, a heating fluid 425 may be introduced into the gap to heat materials 1 for thereby performing drying and dehydration, and the squeeze of raw materials and deaeration are performed, thus performing dehydration of materials effectively. Specifically, heat obtained by a waste heat boiler, heat obtained by combusting hydrogen discharged from a hydrogen electrode (anode) of a fuel cell, heat radiated from a fuel cell stack, or heat possessed by a vent gas of a hydrogen electrode or an oxygen electrode of a fuel cell may be used to heat and dry materials. In this case, as a concrete heating fluid, steam from the waste heat boiler 122 in FIG. 16, or combustion gas from the vent gas burner 163 in which hydrogen discharged from the hydrogen electrode of the fuel cell is combusted may be used, but this steam or this combustion gas may be introduced into a steam turbine or a turbo-charger to recover power, and then used as a heating fluid for heating materials, thereby further enhancing thermal efficiency. A vent gas of an oxygen electrode (cathode) of a fuel cell or air may be used to combust hydrogen discharged from a hydrogen electrode of a fuel cell.

Drying and dehydration by heating of materials may be performed by introducing a heating fluid into the casing section of the raw material feeder for thereby introducing heat obtained by a waste heat boiler, heat obtained by combusting hydrogen discharged from a hydrogen electrode of a fuel cell, heat radiated from a fuel cell stack, or heat possessed by a vent gas of a hydrogen electrode or an oxygen electrode of a fuel cell, or by using the above heat as a heat source of an existing material drying apparatus. Specifically, regardless of using a compression-type raw material feeder shown in FIGS. 18 and 19, before supplying materials to the raw material feeder, materials containing a large amount of water content such as municipal wastes may be dried by heat obtained by a waste heat boiler, heat obtained by combusting hydrogen discharged from a hydrogen electrode of a fuel cell, heat radiated from a fuel cell stack, or heat possessed by a vent gas of a hydrogen electrode or an oxygen electrode of a fuel cell in the existing material drying apparatus, and then supplied to the raw material feeder, thereby achieving the purpose of dehydration of materials.

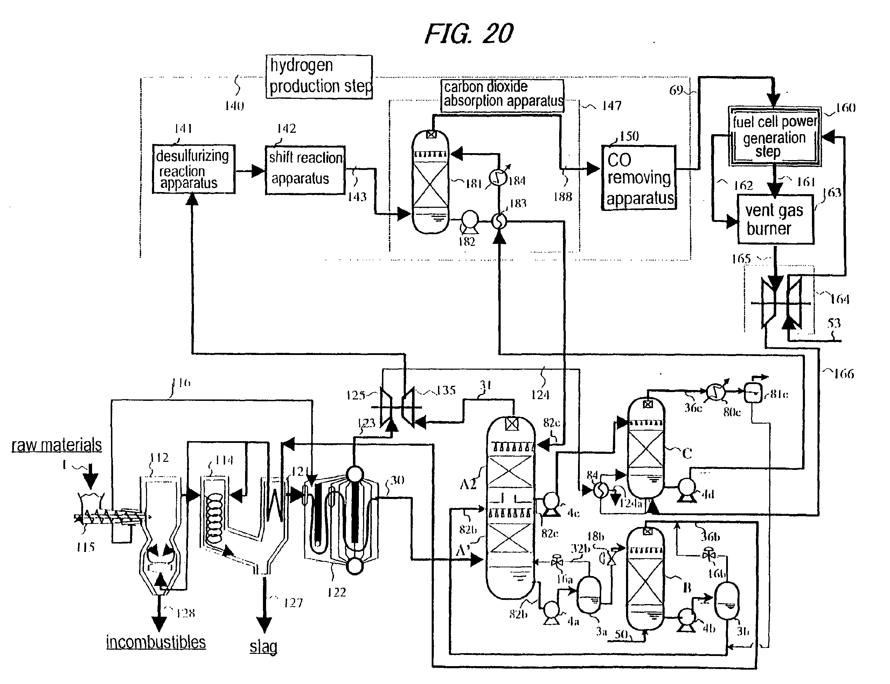

FIG. 20 is a schematic view showing the configuration of another embodiment of a power generation system by gasification of combustibles which incorporates an acid gas removing apparatus of the present invention in which combustibles, i.e. combustible wastes (municipal wastes, refuse-derived fuel, solid-water mixture, used papery plastic wastes, waste FRP, biomass wastes, automobile wastes, industrial wastes such as waste wood, low-grade coal, and waste oil and the like) or coal or the like is gasified, and the produced gas is processed and the processed gas is supplied to a fuel cell. In the present embodiment, a two-stage scrubbing and two-stage regeneration embodiment shown in FIG. 14 is basically used as an acid gas scrubbing apparatus, and the present embodiment is characterized in that the second scrubbing liquid 82c regenerated in the second regenerator C is led to a carbon dioxide absorption tower 181 as a carbon dioxide absorption liquid of the carbon dioxide absorption apparatus 147 in the hydrogen production step 140, carbon dioxide is absorbed and separated from the gas 143 after the shift reaction, and then the second scrubbing liquid 82c is sent to the second gas scrubbing section A2 in the acid gas absorption apparatus. In the present embodiment, an absorption liquid regeneration apparatus which is naturally required in the carbon dioxide absorption apparatus 147 in the hydrogen production step 140 becomes unnecessary, and the regeneration heat is greatly reduced, thus improving thermal efficiency.

Materials 1 which are combustibles are supplied from a raw material feeder 115 to a low-temperature gasification furnace 112 in which the materials 1 are pyrolyzed and gasified at a temperature of 400 to 1000°C, and the produced gas is supplied to a high-temperature gasification furnace 114. Incombustibles in the materials are discharged separately from the low-temperature gasification furnace 112. The produced gas is further gasified at a temperature of 1000 to 1500°C in the high-temperature gasification furnace 114 to reduce the molecular weight of the produced gas. The temperature of the high-temperature gasification furnace 114 is maintained at not lower than the temperature in which ash content contained in the produced gas is melted, and 80 to 90% of ash content in the produced gas is slagged and discharged to the outside of the system as molten slag 127. Organic matter and hydrocarbon in the produced gas are completely decomposed into hydrogen, carbon monoxide, carbon, steam, and carbon dioxide in the high-temperature gasification furnace. The produced gas obtained in the high-temperature gasification furnace 114 passes through a high-temperature heat exchanger 121 and a waste heat boiler 122 in which sensible heat is recovered and the temperature of the produced gas is lowered to 200°C, preferably 350°C, and more preferably 500°C. The recovered sensible heat is used for generation of steam, heating of a gasifying agent, or the like.

In the case where combustible materials having an irregular shape such as municipal wastes are materials, the raw material feeder shown in FIG. 18 should be employed to prevent air from leaking through the raw material feeder. In this case, water squeezed from raw materials in the raw material feeder is supplied to the waste heat boiler 122, and mixed with a high-temperature produced gas to be vaporized and decomposed.

The produced gas, i.e. the gas 30, to be scrubbed, from which sensible heat has been recovered in the waste heat boiler is led to the first gas scrubbing section A' of the present invention, and is brought into contact with a first scrubbing liquid 82b in a countercurrent flow. Therefore, the gas 30 to be scrubbed is cooled by the first scrubbing liquid 82b, and strong acid gases such as hydrogen chloride are absorbed in the first scrubbing liquid 82b, and dust components in the gas are entrapped in the first scrubbing liquid 82b. Next, the gas, to be scrubbed, which has been led from the first gas scrubbing section A' to the second gas scrubbing section A2 is brought into contact with the second scrubbing liquid 82c in a countercurrent flow, and further cooled by the second scrubbing liquid 82c to condense super saturated steam, and weak acid gases such as carbon dioxide and hydrogen sulfide in the gas are absorbed by the second scrubbing liquid 82c. Thus, the scrubbed gas 31 obtained from the second gas scrubbing section A2 becomes a clean gas composed mainly of carbon monoxide and hydrogen having a small solubility in alkaline solution, saturated steam, and carbon dioxide which has not been dissolved in alkaline solution.

On the other hand, the first scrubbing liquid 82b which has absorbed strong acid gases such as hydrogen chloride and whose temperature has increased is sent to the first regenerator B via the gas-liquid separator 3a, and is brought into contact with the first regenerating gas having different components from the gas to be scrubbed and containing oxygen, i.e. a gasifying agent gas 50, for example, an enriched oxygen gas containing oxygen whose oxygen concentration is 80% or more, preferably 90% or more, and more preferably 93% or more, or pure oxygen to generate steam in the first regenerator B until a pressure in the first regenerator B reaches saturated aqueous vapor pressure at a temperature in the first regenerator B.

For example, when the regenerator is operated at an atmospheric pressure (about 0.1 PMa (1 bar)) and a temperature of 80°C, a first regenerator vent gas 36b discharged from the first regenerator accompanies 47% of steam. At the same time, the first scrubbing liquid 82b is deprived of latent heat of vaporization and is cooled. It should be noted that when the first regenerating gas 35b accompanies steam whose amount is equal to or greater than the amount corresponding to saturated aqueous vapor pressure in the first regenerator B, water will not vaporize and the first scrubbing liquid will not be cooled in the first regenerator B. Therefore, it is more preferable that steam content in the first regenerating gas 35b is smaller, i.e. dew point is lower.

Further, because the first scrubbing liquid 82b absorbs strong acid gases in the first gas scrubbing section A', a pH of the first scrubbing liquid 82b is lowered, and because water content of the first scrubbing liquid 82b is vaporized in the first scrubbing liquid regenerator B, it is necessary to replenish the first alkaline agent and water. Further, in the case where dust is contained in the gas to be scrubbed and is entrapped in the first scrubbing liquid 82b, it is necessary to separate dust from the first scrubbing liquid 82b. In the present invention, a chemical adding apparatus and a filtration apparatus are provided in a circulating passage of the first scrubbing liquid, respectively, whereby the pH of the first scrubbing liquid 82b is adjusted by adding first alkaline agent and a diluting water for diluting alkaline agent to the first scrubbing liquid 82b, and the whole or part of the first scrubbing liquid 82b is always filtrated to remove solid components. Any alkaline substance may be used as alkaline agent, but sodium hydroxide or potassium hydroxide is preferable. If the pH of the first scrubbing liquid 82b to be adjusted, i.e. the pH of the first scrubbing liquid 82b at the inlet of the first gas scrubbing section A' is 4 or more, then the first scrubbing liquid 82b has an absorption capability for absorbing hydrogen chloride gas and is preferable. However, if the pH of the first scrubbing liquid 82b is 11 or more, the first scrubbing liquid 82b absorbs carbon dioxide besides strong acid gases and is not preferable because of an increased consumption of the first alkaline agent. Therefore, the pH of the first scrubbing liquid 82b at the inlet of the first gas scrubbing section A' is preferably in the range of 4 to 11, more preferably 5 to 10. Salts produced by neutralization reaction of the first alkaline agent and strong acid gases are gradually accumulated in the first scrubbing liquid 82b, and a part of the first scrubbing liquid is required to be discharged at all times in order to prevent harmful effect caused by excessive condensation of salts.

On the other hand, the first regenerator vent gas 36b which accompanies saturated steam is heated in the high-temperature heat exchanger 121, and then supplied to the gasification furnace as a gasifying agent and an oxidizing agent for partial oxidization.

With regard to temperature of the first scrubbing liquid 82b, the temperature Tlout of the first scrubbing liquid at the outlet of the first gas scrubbing section should be in the range of the boiling point to the boiling point minus 20°C, preferably in the range of the boiling point to the boiling point minus 10°C, and more preferably in the range of the boiling point to the boiling point minus 5°C. Further, the temperature T1in of the first scrubbing liquid at the inlet of the first gas scrubbing section A' should be in the range of the temperature Tlout of the first scrubbing liquid to the temperature T1out minus 20°C, preferably in the range of the saturation temperature of steam in the gas to be scrubbed to the saturation temperature minus 5°C.

The amount of the first scrubbing liquid 82b to be circulated should be determined on the basis of flow rate, temperature and specific heat of the gas to be scrubbed so that the temperature of the first scrubbing liquid meets the temperatures required in the first scrubbing liquid at the outlet and inlet of the first gas scrubbing section A'.

The first scrubbing liquid 82b withdrawn from the first regenerator B is returned to the first gas scrubbing section A' via the gas-liquid separator 3b.

Further, the second scrubbing liquid 82c which has absorbed carbon dioxide and weak acid gases such as hydrogen sulfide and whose temperature has increased by condensation of steam is sent to the second regenerator C, and is brought into contact with the second regenerating gas 35c having different components from the gas to be scrubbed, for example, combustion exhaust gas 166, in the fuel cell power generation step, discharged from the turbocharger 164 to generate steam in the second regenerator C until a pressure in the second regenerator C reaches the saturated aqueous vapor pressure at a temperature in the second regenerator C, and to perform regeneration of alkali by decarbonation.

Further, in the present embodiment, it is desirable that absorption and separation of carbon dioxide in the carbon dioxide absorption apparatus 147 of the hydrogen production step 140 is performed completely. However, in order to reduce the concentration of carbon residue in the gas 188 after the carbon dioxide absorption to, for example, 1% or lower, preferably 0.5% or lower, it is necessary to regenerate the second scrubbing liquid completely in the second regenerator C. In the present embodiment, a reboiler 84 is provided to heat the second scrubbing liquid 82c further by using low-pressure steam 124 discharged from a steam turbine 125, thereby accelerating regeneration of the second scrubbing liquid 82c. The second scrubbing liquid 82c may be regenerated only by the low-pressure steam 124 without using the combustion exhaust gas 166. Condensed water 124a discharged from the reboiler 84 is returned to the waste heat boiler 122.

In the present invention, both of inorganic alkaline agent or organic alkaline agent may be used as second alkaline agent. Alkanolamine absorption solution having a high absorbing ability of carbon dioxide is more preferable. Specific examples of absorbents applicable herein include monoethanolamine (MEA), diethanolamine (DEA), and methyldiethanolamine (MDEA) and the like. An absorption reaction by alkanolamine absorption liquid is represented by the following formula. A regenerating reaction of the absorption liquid is a reverse reaction of the following reaction.

$$R\text{-}NH_2 + H_2O + CO_2 \rightarrow R\text{-}NH_3HCO_3 \tag{13}$$

On the other hand, the second regenerator vent gas 36c which accompanies desorbed carbon dioxide and saturated steam is discharged through a condenser 80c and a condensed water separator 81c. The condensed water recovered in the condensed water separator 81c is returned to the interior of the system as a diluting water of the second scrubbing liquid 82c or a diluting water of first alkaline agent or a diluting water of the first scrubbing liquid 82b.

With regard to temperature of the second scrubbing liquid 82c, the temperature T2out of the second scrubbing liquid at the outlet of the second gas scrubbing section A2 should be in the range of the temperature Tlin of the first scrubbing liquid at the inlet of the first gas scrubbing section A' to the temperature Tlin minus 20°C, and preferably in the range of the temperature Tlin of the first scrubbing liquid at the inlet of the first gas scrubbing section A' to the temperature Tlin minus 10°C. Further, the temperature T2in of the second scrubbing liquid at the inlet of the second gas scrubbing section A2 should be lower than the temperature T2out of the second scrubbing liquid at the outlet of the second gas scrubbing section A2 by 5°C or more, preferably 10°C or more, and more preferably 20°C or more.

The amount of the second scrubbing liquid 82c to be circulated should be determined on the basis of flow rate, temperature and specific heat of the gas to be scrubbed so that the temperature of the second scrubbing liquid meets the temperatures required in the second scrubbing liquid at the outlet and inlet of in the second gas scrubbing section A2.

The second scrubbing liquid 82c withdrawn from the second regenerator C is returned to the carbon dioxide absorption apparatus 147 in the hydrogen production step 140.

On the other hand, the scrubbed gas 31 which has been scrubbed and cooled is pressurized to a pressure of 200 to 800 kPa in a gas compressor 135, and then supplied to the hydrogen production step 140. The gas compressor 135 is driven by a steam turbine 125 which uses high-pressure steam 123 from the waste heat boiler 122. Low-pressure steam 124 discharged from the steam turbine 125 is supplied to the reboiler 84 where the low-temperature steam 124 serves as a heat source for regeneration of the second scrubbing liquid 82c.

The hydrogen production step 140 incorporates a desulfurizing reaction apparatus 141 for removing sulfur content in the produced gas; a shift reaction apparatus 142 for converting carbon monoxide and $H_2O$ in the produced gas into hydrogen and carbon dioxide by a shift reaction; a carbon dioxide absorption apparatus 147 for absorbing and removing carbon dioxide in the produced gas after the shift reaction; and a CO removing apparatus 150 for removing carbon monoxide remaining in the gas 188 after carbon dioxide absorption, and the produced gas is sequentially processed in the respective apparatuses to obtain highly enriched hydrogen gas 69. In the CO removing apparatus 150, a selective oxidation apparatus for combusting carbon monoxide in the gas selectively, or a methanation reaction apparatus for producing methane by reacting carbon monoxide and carbon dioxide in the gas with hydrogen, or a hydrogen purifying PSA (pressure swing adsorption apparatus) for adsorbing and separating gas components, other than hydrogen, such as carbon monoxide, carbon dioxide, and nitrogen by adsorbent such activated carbon or zeolite is used.

In the carbon dioxide absorption apparatus 147 of the present embodiment, a carbon dioxide absorption tower 181, a feed pump 182, a heat exchanger 183 and a cooler 184 are provided. The second scrubbing liquid 82c regenerated in the second regenerator C of the acid gas scrubbing apparatus is introduced into the upper part of the carbon dioxide absorption tower 181 via the heat exchanger 183 and the cooler 184, and is brought into contact with the gas 143 after the shift reaction introduced into the lower part of the absorption tower in a countercurrent flow to absorb carbon dioxide, and then returned by the feed pump 182 from the bottom of the carbon dioxide absorption tower 181 to the second gas scrubbing section A2 via the heat exchanger 183. The second scrubbing liquid 82c is cooled by the cooler 184 to a temperature suitable for absorption of carbon dioxide, preferably 40 to 70°C, and then introduced into the carbon dioxide absorption tower 181. Both of water-cooling or air-cooling may be used as a cooling method in the cooler 184. Further, the second scrubbing liquid 82c discharged from the carbon dioxide absorption apparatus 147 is adjusted to the temperature T2in of the second scrubbing liquid at the inlet of the second gas scrubbing section A2, and then introduced into the scrubbing section.

Further, in the case where carbon dioxide absorption load in the carbon dioxide absorption apparatus 147 is relatively small, i.e. the flow rate of the second absorption liquid to be supplied to the carbon dioxide absorption tower 181 is smaller than the flow rate of the second scrubbing liquid supplied to the second gas scrubbing section A2, the second scrubbing liquid 82c discharged from the second regenerator C is branched, and a part of the second scrubbing liquid 82c is sent to the carbon dioxide absorption apparatus 147 and the remainder is returned to the second gas scrubbing section A2 directly or via a cooler for temperature adjustment. In this case, the second scrubbing liquid 82c discharged from the carbon dioxide absorption apparatus 147 is sent to the second gas scrubbing section A2 or returned to the second regenerator C.

In the fuel cell power generation step 160, the highly enriched hydrogen gas 69 is supplied to a hydrogen electrode of a fuel cell and air 53 is pressurized by the turbo-charger 164 and supplied to an oxygen electrode of the fuel cell, thus generating electricity. The fuel cell may be any fuel cell as far as such fuel cell can use hydrogen as a fuel, and any type of a proton exchange membrane fuel cell, a phosphoric acid fuel cell, a molten carbonate fuel cell and a solid electrolyte fuel cell may be used.

The hydrogen electrode vent gas 161 and the oxygen electrode vent gas 162 are led to the vent gas burner 163 and combusted. Combustion exhaust gas 165 of the vent gas burner 163 is supplied to the turbo-charger 164, and air 53 to be supplied to the oxygen electrode of the fuel cell is pressurized by the turbo-charger 164. Thereafter, the combustion exhaust gas 165 is used as a regenerating gas of the second regenerator C. Further, if regeneration in the second regenerator C is performed only by the low-pressure steam 124, then the combustion exhaust gas 166 from which steam and heat has been recovered is discharged to the outside of the system.

As described above, according to the acid gas scrubbing apparatus and method of the present invention, the acid gas scrubbing apparatus and method can increase energy efficiency and improve an acid gas removal capability in a wet-type scrubber greatly by effectively utilizing low-temperature waste heat of the wet-type scrubber to generate steam and to absorb and separate carbon dioxide. Further, according to the present invention, a gasification system of combustibles which combines the above acid gas scrubbing apparatus having the above advantages and a gasification apparatus, and an incineration system of combustibles which combines the above acid gas scrubbing apparatus and an incinerator can be constituted. Further, a fuel cell power generation system by gasification of combustibles which combines the gasification system of combustibles and a fuel cell can be constituted.

**Industrial Applicability**

The present invention relates to an acid gas scrubbing apparatus and method in which a gas, to be scrubbed, containing carbon dioxide is brought into contact with a gas scrubbing liquid containing alkaline agent and cooled, and acid gases in the gas are removed. The present invention can be suitably utilized in a gasification system of combustibles which combines the acid gas scrubbing apparatus and a gasification apparatus, an incineration system of combustibles which combines the acid gas scrubbing apparatus and an incinerator, and a fuel cell power generation system by gasification of combustibles which combines the gasification system of combustibles and a fuel cell.

**Claims**

1.  In a method for removing acid gases in a gas, to be scrubbed, containing carbon dioxide by bringing the gas to be scrubbed into contact with a gas scrubbing liquid containing alkaline agent, an acid gas scrubbing method, **characterized in that**:

    said gas scrubbing liquid is regenerated by' bringing said gas scrubbing liquid into contact with a regenerating gas having components different from said gas to be scrubbed, and the regenerated gas scrubbing liquid is used as a scrubbing liquid of said gas, to be scrubbed, containing carbon dioxide.

2.  In a method for removing acid gases in a gas, to be scrubbed, containing carbon dioxide by bringing the gas to be scrubbed into contact with a gas scrubbing liquid containing alkaline agent, an acid gas scrubbing method, **characterized in that**:

    said gas scrubbing liquid is regenerated by bringing said gas scrubbing liquid into contact with a regenerating gas having components different from said gas to be scrubbed, and then regenerated by bringing said gas scrubbing liquid into contact with a second regenerating gas having components identical to or different from said regenerating gas, and the regenerated gas scrubbing liquid is used as a scrubbing liquid of said gas, to be scrubbed, containing carbon dioxide.

3.  In a method for removing acid gases in a gas, to be scrubbed, containing strong acid gases such as hydrogen chloride and weak acid gases such as hydrogen sulfide and carbon dioxide by bringing said gas to be scrubbed into contact with a gas scrubbing liquid containing alkaline agent, an acid gas scrubbing method, **characterized in that**:

    said strong acid gases in said gas to be scrubbed are removed by bringing said gas to be scrubbed into contact with a first gas scrubbing liquid containing first alkaline agent, and then said carbon dioxide and said weak acid gases in said gas to be scrubbed are removed by bringing said gas to be scrubbed into contact with a second gas scrubbing liquid containing second alkaline agent, said first gas scrubbing liquid and said second gas scrubbing liquid are regenerated by bringing said first gas scrubbing liquid and said second gas scrubbing liquid into contact with a first regenerating gas and a second regenerating gas, respectively, which have components different from said gas to be scrubbed, and the regenerated first gas scrubbing liquid and the regenerated second gas scrubbing liquid are used as a scrubbing liquid of said gas to be scrubbed.

4.  An acid gas scrubbing method according to any one of claims 1 to 3, wherein said gas to be scrubbed comprises a gas produced by gasification of combustibles in a gasification step.

5.  An acid gas scrubbing method according to any one of claims 1 to 4, wherein after said gas to be scrubbed is scrubbed, the scrubbed gas is supplied to a hydrogen production step.

6.  An acid gas scrubbing method according to any one of claims 1 to 5, wherein after said gas to be scrubbed is scrubbed, the scrubbed gas is supplied to a fuel cell via a hydrogen production step.

7.  An acid gas scrubbing method according to any one of claims 1 to 3, wherein said gas to be scrubbed comprises a gas generated by incineration of combustibles.

8.  An acid gas scrubbing apparatus, comprising:

    a gas scrubber for removing acid gases in a gas, to be scrubbed, containing carbon dioxide by bringing the gas to be scrubbed into contact with a gas scrubbing liquid containing alkaline agent;
    a scrubbing liquid regenerator for regenerating and cooling said gas scrubbing liquid by bringing said gas scrubbing liquid into contact with a regenerating gas having components different from said gas scrubbing liquid and said gas to be scrubbed; and

circulating means provided between said gas scrubber and said scrubbing liquid regenerator for circulating said scrubbing liquid.

9. An acid gas scrubbing apparatus, comprising:

a gas scrubber for removing acid gases in a gas, to be scrubbed, cohtaining carbon dioxide by bringing the gas to be scrubbed into contact with a gas scrubbing liquid containing alkaline agent;

a first scrubbing liquid regenerator for regenerating and cooling said gas scrubbing liquid by bringing said gas scrubbing liquid into contact with a first regenerating gas having components different from said gas scrubbing liquid and said gas to be scrubbed;

a second scrubbing liquid regenerator for regenerating and cooling said gas scrubbing liquid discharged from said first scrubbing liquid regenerator by bringing said gas scrubbing liquid into contact with a second regenerating gas having components identical to or different from said first regenerating gas; and

circulating means provided between said gas scrubber and said second regenerator for circulating said scrubbing liquid.

10. An acid gas scrubbing apparatus, comprising:

a gas scrubber for removing acid gases in a gas, to be scrubbed, containing carbon dioxide by bringing the gas to be scrubbed into contact with a gas scrubbing liquid containing alkaline agent;

a three-stage or more of scrubbing liquid regenerator for regenerating and cooling said gas scrubbing liquid by bringing said gas scrubbing liquid into contact with plural kinds of regenerating gases having components different from said gas scrubbing liquid and said gas to be scrubbed; and

circulating means provided between a final-stage regenerator and said gas scrubber for circulating said scrubbing liquid for the purpose of returning said scrubbing liquid from said final-stage regenerator to said gas scrubber.

11. An acid gas scrubbing apparatus according to claim 8 or 9 or 10, further comprising a gas-liquid separator provided between said gas scrubber and said scrubbing liquid regenerator for separating gas components, to be scrubbed, accompanied by said gas scrubbing liquid;

wherein said gas scrubbing liquid flows from said gas scrubber into said gas-liquid separator, and after gas-liquid separation, said gas scrubbing liquid flows in said scrubbing liquid regenerator.

12. An acid gas scrubbing apparatus according to any one of claims 8 to 11, wherein as said regenerating gas of said scrubbing liquid, oxygen-containing gas such as air or pure oxygen is used.

13. An acid gas scrubbing apparatus according to claim 12, further comprising a gas-liquid separator provided downstream of said scrubbing liquid regenerator in a scrubbing liquid path for separating gas components, to be scrubbed, accompanied by said gas scrubbing liquid;

wherein said gas scrubbing liquid flows from said scrubbing liquid regenerator to said gas-liquid separator, and after removing gas components accompanied by said gas scrubbing liquid by gas-liquid separation, said gas scrubbing liquid flows in a regenerator or a gas scrubber provided downstream of said gas-liquid separator.

14. An acid gas scrubbing apparatus according to any one of claims 8 to 13, wherein a gas-phase pressure in said gas scrubber is operated in the range of 80 to 110 kPa, and a gas-phase pressure in said scrubbing liquid regenerator is operated in the range of 110 to 200 kPa.

15. An acid gas scrubbing apparatus according to any one of claims 8 to 14, wherein a temperature of said circulating scrubbing liquid is in the range of 50 to 300°C.

16. An acid gas scrubbing apparatus according to any one of claims 8 to 14, wherein a temperature of said circulating scrubbing liquid is in the range of 50 to 200°C.

17. An acid gas scrubbing apparatus according to any one of claims 8 to 14, wherein a temperature of said circulating scrubbing liquid is in the range of 50 to 100°C.

18. An acid gas scrubbing apparatus, comprising:

a first gas scrubbing section for removing strong acid gases in a gas, to be scrubbed, containing said strong acid gases such as hydrogen chloride and weak acid gases such as hydrogen sulfide and carbon dioxide and cooling said gas to be scrubbed by bringing said gas to be scrubbed into contact with a first gas scrubbing liquid containing first alkaline agent in a countercurrent flow;
a second gas scrubbing section for removing carbon dioxide and weak acid gases in said gas, to be scrubbed, discharged from said first gas scrubbing section and cooling said gas to be scrubbed by bringing said gas to be scrubbed into contact with a second gas scrubbing liquid containing second alkaline agent in a countercurrent flow;
a first scrubbing liquid regenerator for regenerating and cooling said first gas scrubbing liquid by bringing said first gas scrubbing liquid into contact with a first regenerating gas having components different from said first gas scrubbing liquid and said gas to be scrubbed in a countercurrent flow;
a second scrubbing liquid regenerator for regenerating and cooling said second gas scrubbing liquid by bringing said second gas scrubbing liquid into contact with a second regenerating gas having components different from said second gas scrubbing liquid and said gas to be scrubbed in a countercurrent flow;
circulating means provided between said first gas scrubbing section and said first scrubbing liquid regenerator for circulating said first scrubbing liquid; and
circulating means provided between said second gas scrubbing section and said second scrubbing liquid regenerator for circulating said second scrubbing liquid.

19. An acid gas scrubbing apparatus according to claim 18, wherein said circulating means provided between said first gas scrubbing section and said first scrubbing liquid regenerator for circulating said first scrubbing liquid comprises chemical adding means for adding aqueous solution containing said first alkaline agent, and solid-liquid separation means for separating solid components in said first scrubbing liquid.

20. An acid gas scrubbing apparatus according to claim 18 or 19, further comprising gas-liquid separators provided between said first gas scrubbing section and said first scrubbing liquid regenerator and between said second gas scrubbing section and said second scrubbing liquid regenerator, respectively, for separating gas components, to be scrubbed, accompanied by said first and second gas scrubbing liquid.

21. An acid gas scrubbing apparatus according to any one of claims 18 to 20, wherein as said first regenerating gas, oxygen-containing gas such as air or pure oxygen is used.

22. An acid gas scrubbing apparatus according to any one of claims 18 to 21, further comprising gas-liquid separators provided downstream of said first and second scrubbing liquid regenerators in a scrubbing liquid path, respectively, for separating regenerating gas components accompanied by said first and second gas scrubbing liquid.

23. An acid gas scrubbing apparatus according to any one of claims 18 to 22, wherein a gas-phase pressure in said first and second gas scrubbing sections is operated in the range of 80 to 110 kPa, and a gas-phase pressure in said first and second scrubbing liquid regenerators is operated in the range of 110 to 200 kPa.

24. An acid gas scrubbing apparatus according to any one of claims 18 to 23, wherein the temperature of said first scrubbing liquid at the outlet of said first gas scrubbing section is in the range of the boiling point to the boiling point minus 20°C, and the temperature of said first scrubbing liquid at the inlet of said first gas scrubbing section is in the range of the temperature of said first scrubbing liquid at the outlet of said first gas scrubbing section to said temperature of said first scrubbing liquid at the outlet of said first gas scrubbing section minus 20°C or in the range of the saturation temperature of steam in the gas to be scrubbed to said saturation temperature of steam minus 5°C.

25. An acid gas scrubbing apparatus according to any one of claims 18 to 24, wherein the temperature of said second scrubbing liquid at the outlet of said second gas scrubbing section is in the range of the temperature of said first scrubbing liquid at the inlet of said first gas scrubbing section to said temperature of said first scrubbing liquid at the inlet of said first gas scrubbing section minus 20°C, and the temperature of said second scrubbing liquid at the inlet of said second gas scrubbing section is lower than the temperature of said second scrubbing liquid at the outlet of said second gas scrubbing section by 5°C or more.

26. An acid gas scrubbing apparatus according to any one of claims 18 to 25, wherein a pH of said first scrubbing liquid in said first gas scrubbing section is in the range of 4 to 11, and a pH of said second scrubbing liquid in said second gas scrubbing section is in the range of 7 to 12.

27. A gasification system of combustibles, **characterized in that**:

a gasification apparatus is provided to obtain a combustible gas from combustibles such as combustible wastes, biomass, or coal, a produced gas produced by said gasification apparatus is scrubbed by said acid gas scrubbing method according to any one of claims 1 and 2 or said acid gas scrubbing apparatus according to any one of claims 8 to 17, and a regenerator vent gas of said acid gas scrubbing apparatus is led to said gasification apparatus to be utilized as a gasifying agent for gasification.

28. A gasification system of combustibles, **characterized in that**:

a gasification apparatus is provided to obtain a combustible gas from combustibles such as combustible wastes, biomass, or coal, a produced gas produced by said gasification apparatus is cooled and scrubbed by said acid gas scrubbing method according to claim 3 or said acid gas scrubbing apparatus according to any one of claims 18 to 26, and a first scrubbing liquid regenerator vent gas of said acid gas scrubbing apparatus is led to said gasification apparatus to be utilized as a gasifying agent for gasification.

29. A gasification system of combustibles according to claim 27 or 28, wherein said gasification apparatus comprises a fluidized-bed gasification furnace whose bed temperature is operated in the range of 450 to 950°C.

30. A gasification system of combustibles according to claim 29, wherein said gasification apparatus comprises a melting furnace provided downstream of said fluidized-bed gasification furnace and operated at a temperature of 1200 to 1500°C for melting and slagging dust components contained in the produced gas.

31. An incineration system, **characterized in that**:

an incineration apparatus is provided to incinerate combustibles such as combustible wastes, combustion exhaust gas from said incineration apparatus is scrubbed by said acid gas scrubbing apparatus according to any one of claims 8 to 17, and a regenerating gas of said acid gas scrubbing apparatus is led to said incineration apparatus to be utilized as a combustion oxidization gas.

32. An incineration system according to claim 31, wherein said incineration apparatus comprises a fluidized-bed incinerator whose bed temperature is operated in the range of 450 to 950°C.

33. An incineration system according to claim 32, wherein said incineration apparatus comprises a melting furnace provided downstream of said fluidized-bed incinerator and operated at a temperature of 1200 to 1500°C for melting and slagging dust components contained in the combustion gas.

FIG. 1

# FIG. 2

FIG. 3

# FIG. 4

FIG. 5

FIG. 6

EP 1 201 290 A1

## FIG. 7

gasification step — 110

low-temperature gasification furnace 112

high-temperature gasification furnace 114

heat recovery step — 120

121

heat recovery boiler 122

A produced gas pretreatment step

gas scrubber

gas compressor (1) 135 — 130

raw materials

1

37

36b

40 40

highly enriched oxygen gas

fuel cell power generation step 160

alkaline regenerator B

57

59

51

55 80 35b

61 61

waste liquid 47b

68 58

20

methane absorption apparatus 170

pure water tank

flash tank

condensed water tank 60

56

65

66 58

67

hydrogen production step — 140

hydrogen purifying and pressurizing apparatus 149

methanation reaction apparatus 148

carbon dioxide absorption apparatus 147

gas compressor (2) 145 80

shift reaction apparatus 142

desulfurizing reaction apparatus 141

60 B

EP 1 201 290 A1

## FIG. 8

**gasification step** — 110

- 112 low-temperature gasification furnace
- 114 high-temperature gasification furnace

raw materials → 1

**heat recovery step** — 120

- 121
- 122 heat recovery boiler

**A** produced gas pretreatment step

- gas scrubber
- 135 gas compressor (1) — 130

air — 51

- 100 fuel cell power generation step
- 170 methane absorption apparatus
- 20
- 56
- 68
- 55
- 80
- 59
- 35c
- 37
- 36b
- 57
- 47a
- 50
- first regenerator **B**
- 40
- 36c
- 47b
- 58
- second regenerator **C**
- 40
- 47c waste liquid

- 61
- 65
- 67
- pure water tank
- flash tank
- 58
- condensed water tank
- 58
- 66

**hydrogen production step** — 140

- 149 hydrogen purifying and pressurizing apparatus
- 148 methanation reaction apparatus
- 147 carbon dioxide absorption apparatus
- 145 gas compressor (2)
- 80
- 142 shift reaction apparatus
- 141 desulfurizing reaction apparatus
- 60

EP 1 201 290 A1

# FIG. 9

# FIG. 10

# FIG. 11

gasification step — 110

heat recovery step — 120

A produced gas pretreatment step — 130

raw materials →

112 — low-temperature gasification furnace

114 — high-temperature gasification furnace

121

122 — heat recovery boiler

gas scrubber

135 — gas compressor (1)

51 — air

160 — fuel cell power generation step

methane absorption apparatus — 170

pure water tank

flash tank

condensed water tank

first regenerator

second regenerator

waste liquid

36c

37

57

59

55

80

35b

58

61

68

56

20

65

67

66

58

58

40

47a

B

47b

36b

40

40

50

47c

C

hydrogen production step — 140

hydrogen purifying and pressurizing apparatus — 149

methanation reaction apparatus — 148

carbon dioxide absorption apparatus — 147

gas compressor (2) — 145

80

shift reaction apparatus — 142

desulfurizing reaction apparatus — 141

60

EP 1 201 290 A1

# FIG. 12

# FIG. 13

EP 1 201 290 A1

## FIG. 14

## FIG. 15

FIG. 16

# FIG. 17

EP 1 201 290 A1

## FIG. 18

squeeze of raw materials · deaeration

## FIG. 19

squeeze of raw materials · deaeration · vaporized water content

EP 1 201 290 A1

## FIG. 20

hydrogen production step 140

desulfurizing reaction apparatus 141

shift reaction apparatus 142

carbon dioxide absorption apparatus 147

CO removing apparatus 150

fuel cell power generation step 160

vent gas burner

raw materials

incombustibles

slag

EP 1 201 290 A1

50

## INTERNATIONAL SEARCH REPORT

| | International application No. |
|---|---|
| | PCT/JP00/04857 |

**A. CLASSIFICATION OF SUBJECT MATTER**
Int.Cl⁷ B01D53/14, B01D53/18, B01D53/34, B01D53/40, B01D53/62, C01J3/00, C01K1/08, C01K1/12

According to International Patent Classification (IPC) or to both national classification and IPC

**B. FIELDS SEARCHED**

Minimum documentation searched (classification system followed by classification symbols)
Int.Cl⁷ B01D53/14, B01D53/18, B01D53/34, B01D53/40, B01D53/62, B01D53/78, C10J3/00, C10K1/08, C10K1/12

Documentation searched other than minimum documentation to the extent that such documents are included in the fields searched
Jitsuyo Shinan Koho        1926-1996        Toroku Jitsuyo Shinan Koho        1994-2000
Kokai Jitsuyo Shinan Koho        1971-2000        Jitsuyo Shinan Keisai Koho        1996-2000

Electronic data base consulted during the international search (name of data base and, where practicable, search terms used)
WPI (DIALOG)

**C. DOCUMENTS CONSIDERED TO BE RELEVANT**

| Category* | Citation of document, with indication, where appropriate, of the relevant passages | Relevant to claim No. |
|---|---|---|
| X | Microfilm of the specification and drawings annexed to the request of Japanese Utility Model Application No.166305/1988 (Laid-open No.086627/1990) (Ishikawajima-Harima Heavy Industries Co., Ltd.), 09 July, 1990 (09.07.90), Claims of Utility Model (Family: none) | 1,8 |
| Y | idem | 2-7,9-13, 15-22,26 |
| A | idem | 14,23-25 |
| Y | CA, 1295810, C (BASF AKTIENGESELLSHAFT), 18 February, 1992 (18.02.92), page 8, line 9 to page 9, line 7; page 5, lines 10 to 30 & EP, 202600, A2    & DE, 3518368, A1 & JP, 61-271016, A | 2,9-1315-17 |
| Y | US, 4367258, A1 (Snamprogetti, S.p.A.), 04 January, 1983 (04.01.83), Column 2, line 17 to Column 3, line 9; drawings & DE, 3032470, A    & FR, 2469199, A | 3,18-22,26 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 October, 2000 (30.10.00) | 07 November, 2000 (07.11.00) |

| Name and mailing address of the ISA/ | Authorized officer |
|---|---|
| Japanese Patent Office | |
| Facsimile No. | Telephone No. |

Form PCT/ISA/210 (second sheet) (July 1992)

**INTERNATIONAL SEARCH REPORT**

International application No.

PCT/JP00/04857

| C (Continuation). DOCUMENTS CONSIDERED TO BE RELEVANT | | |
|---|---|---|
| Category* | Citation of document, with indication, where appropriate, of the relevant passages | Relevant to claim No. |
| | & GB, 2062597, A     & JP, 56-067525, A | |
| Y | JP, 10-067992, A (Ebara Corporation), 10 March, 1998 (10.03.98), Claims; page 2, right column, lines 29 to 50, page 4, left column, line 34 to right column, line 45; page 6, left column, line 45 to page 10, left column, line 42 (Family: none) | 4,5,7 |
| A | idem | 27-33 |
| Y | JP, 10-205723, A (NGK INSULATORS, LTD.), 04 August, 1998 (04.08.98), page 2, right column, line 30 to page 3, right column, line 19; Figs. 1 to 6   (Family: none) | 4-7 |
| Y | JP, 53-149171, A (Chiyoda, Chem. Eng. & Constr. Co., Ltd.), 26 December, 1978 (26.12.78), page 6, lower left column, line 11 to page 7, upper left column, line 8; Figs. 1, 2   (Family: none) | 11,13,20,22 |
| Y | EP, 487102, A1 (HITACHI, LTD.), 27 May, 1992 (27.05.92), page 6, left column, line 20 to right column, line 14; Figs. 1 to 4, 7 & DE, 69111754, E   & JP, 4-190831, A | 19 |
| Y | JP, 3-038219, A (Chiyoda, Chem. Eng. & Constr. Co., Ltd.), 19 February, 1991 (19.02.91), page 3, upper left column, line 15 to upper right column, line 16; page 4, lower right column, line 14 to page 5, upper left column, line 9   (Family: none) | 26 |

Form PCT/ISA/210 (continuation of second sheet) (July 1992)